# EUROPEAN PATENT SPECIFICATION

(11) **EP 4 425 432 B1**
(45) Date of publication and mention of the grant of the patent: **11.02.2026**
(21) Application number: 22885712.4
(22) Date of filing: 14.10.2022
(51) Int. Cl.: G06T 7/80, G06T 19/00, G06T 7/70, G02B 27/01, G06T 7/33, G06T 7/73, G06V 20/59, G06V 40/19

(54) **ALIGNMENT METHOD AND ALIGNMENT APPARATUS FOR DISPLAY DEVICE, AND VEHICLE-MOUNTED DISPLAY SYSTEM**
AUSRICHTUNGSVERFAHREN UND AUSRICHTUNGSVORRICHTUNG FÜR EINE ANZEIGEVORRICHTUNG UND FAHRZEUGMONTIERTES ANZEIGESYSTEM
PROCÉDÉ D'ALIGNEMENT ET APPAREIL D'ALIGNEMENT POUR DISPOSITIF D'AFFICHAGE, ET SYSTÈME D'AFFICHAGE MONTÉ SUR VÉHICULE

(30) Priority: 28.10.2021 CN 202111267017
(43) Date of publication of application: 04.09.2024
(73) Proprietor: ARCSOFT CORPORATION LIMITED, Hangzhou, Zhejiang 310012 (CN)
(72) Inventor: YU, Li, Hangzhou, Zhejiang 310012 (CN); XU, Xueyang, Hangzhou, Zhejiang 310012 (CN); WANG, Jin, Hangzhou, Zhejiang 310012 (CN)
(74) Representative: HGF
(86) International application number: PCT/CN2022/125475
(87) International publication number: WO 2023/071834

(56) References cited:
- WO-A1-2020/166376
- CN-A- 110 148 224
- CN-A- 110 298 924
- CN-A- 113 129 224
- CN-A- 113 240 592
- CN-A- 114 022 565
- US-A1- 2017 169 612
- US-A1- 2021 260 998

## Description

### Technical Field

The present application relates to the technical field of image processing, and in particular to an alignment method and alignment apparatus for a display device, and a vehicle-mounted display system.

### Background

With the rise of "intelligence" trend, technologies such as computer vision, artificial intelligence, virtual/augmented reality and the like have been widely used in the fields of driving and safety of vehicles. By means of a head-up display (HUD), it is not necessary for a user to lower his/her head to check the information of instruments, thus the user maintains a head-up state all the time, thereby reducing safety hazards caused by ignoring rapid changes in the external environment during the process of lowering the head and raising the head, and thus greatly improving the driving experience of the vehicle. In 2012, researchers added navigation information to the HUD, so that the vehicle can be reminded of the driving direction at the next moment according to its own location, and the concept of augmented reality (AR) is introduced into the HUD like a milestone, so that the HUD can prompt the information of a real scenario in a virtual image, and thus the application scenarios of the HUD are enriched.

In recent years, the HUD develops gradually to an immersive augmented reality head-up display (AR-HUD), and the immersive AR-HUD requires that the virtual image in the eyes of the user is associated with the real scenario covered by the virtual image in the eyes of the user, for example, a high-brightness lane line boundary prompts a planed path, a safe driving distance, and the like, thereby greatly improving the user experience. However, similarly, the requirements of the immersive AR-HUD for virtual-real alignment and calibration are also correspondingly improved. Currently, the main defects of the virtual-real alignment of the immersive AR-HUD and the calibration technology thereof include: (1) in a vehicle-mounted application, the head movement of a driver cannot be constrained, so that a geometric relationship between a virtual image projected by the AR-HUD and the angle of view of the user cannot be generally fixed as an AR helmet, AR glasses and other AR applications; and (2) in the vehicle-mounted application, since the vehicle moves at a high speed, the alignment precision may be reduced by a very small delay due to the amplification of the vehicle speed. Therefore, developing virtual-real alignment technologies of the AR-HUD moving along with the line of sight and calibration algorithms thereof, and improving the algorithm performance are keys to enable the AR-HUD to be widely commercialized in a large scale.

In related arts, common virtual-real alignment technologies includes two types: in a first prior art, a three-dimensional out-of-vehicle scenery may be re-projected to human eyes through a three-dimensional calibration re-projection technology, and may be cut off on a virtual image plane of the AR-HUD, but because the technology has very high requirements for a sensor and the computing power, large-scale commercial use cannot be realized, and the out-of-vehicle scenery is generally constrained at a certain depth in order to reduce the cost, therefore when a scenery beyond the depth is re-projected to a virtual image of the AR-HUD, the size of the virtual image is inconsistent with the size of the covered real scenario, resulting in a visual difference of the driver; and in a second prior art, corresponding virtual image content is directly "pasted" according to a fixed scenario seen in the angle of view of the driver during the calibration through a two-dimensional alignment technology, but the technology lacks a quantitative index for calibration, it is required that the locations and postures of the human eyes and the virtual image of the AR-HUD should be ensured to be consistent with those during the calibration, such that the technology cannot be compatible with the requirement of "moving with the line of sight of the driver", as a result, the application scenario of this technology is too narrow, is only applicable to annotating environments on a ground plane, is unable to adapt to uphill and downhill scenarios, and is also unable to annotate sceneries above the ground plane such as pedestrians, vehicles and signal systems.

Document US20170169612A1 discloses an augmented reality alignment system and method, and the alignment system may be configured to consider a number of dynamic and static error factor inputs in real time such that when a graphic image is projected, the graphic image is substantially aligned with the real-world target it is intended to overlay and the graphic image is displayed substantially free of distortion.

In view of the above problems, no effective solution has been proposed at present.

### Summary

The present disclosure provides an alignment method and alignment apparatus for a display device, and a vehicle-mounted display system, so as to at least solve the technical problem in related arts that a driver and a passenger cannot obtain good virtual-real alignment "immersive" augmented reality experience while moving the line of sight, thus reducing the use interest of the driver and the passenger.

According to one aspect of the present disclosure, provided is an alignment method for a display device, including: a line-of-sight focusing area of a user in a target carrier is determined, wherein the line-of-sight focusing area at least includes one entity reference object; a photographed image collected by a first camera for an original scenario is acquired, and an entity identification point is extracted from the photographed image; a two-dimensional image mapping relationship between the photographed image and a virtual image in the current field of view of the user is determined by means of pre-obtained calibration parameters, wherein the virtual image is an image to be projected by the display device; and the entity identification point is projected into the virtual image according to the two-dimensional image mapping relationship, wherein a virtual marker in the virtual image is aligned with the entity reference object in the line-of-sight focusing area.

According to another aspect of the present disclosure, further provided is an alignment apparatus for a display device, including: a first determination unit, configured to determine a line-of-sight focusing area of a user in a target carrier, wherein the line-of-sight focusing area at least includes one entity reference object; a first acquisition unit, configured to acquire a photographed image collected by a first camera for an original scenario, and extract an entity identification point from the photographed image; a second determination unit, configured to determine a two-dimensional image mapping relationship between the photographed image and a virtual image in the current field of view of the user by means of pre-obtained calibration parameters, wherein the virtual image is an image to be projected by the display device; and an alignment unit, configured to project the entity identification point into the virtual image according to the two-dimensional image mapping relationship, wherein a virtual marker in the virtual image is aligned with the entity reference object in the line-of-sight focusing area.

According to another aspect of the present disclosure, further provided is a vehicle-mounted display system, including: a driver monitor system, configured to track a line-of-sight focusing area of a user in a target carrier, wherein the line-of-sight focusing area at least includes one entity reference object; a dashcam, configured to photograph the line-of-sight focusing area to obtain a photographed image; a vehicle-mounted controller, respectively connected with the driver monitor system and the dashcam for executing any one of the above-mentioned alignment method for the display device; and a head-up display, configured to project a virtual image to a preset location in front of the user, wherein a virtual identifier in the virtual image is aligned with the entity reference object in the line-of-sight focusing area.

According to another aspect of the present disclosure, further provided is a vehicle-mounted control device, including: a processor; and a memory, configured to store an executable instruction of the processor, wherein the processor is configured to execute the executable instruction, so as to execute any one of the above-mentioned alignment method for the display device.

According to another aspect of the present disclosure, further provided is a computer-readable storage medium, including a stored computer program, wherein the computer program controls, when running, a device where the computer-readable storage medium is located to execute any one of the above-mentioned alignment method for the display device.

In the present disclosure, the line-of-sight focusing area of the user in the target carrier is determined at first, wherein the line-of-sight focusing area at least includes one entity reference object, the photographed image collected by the first camera for the original scenario is acquired, the entity identification point is extracted from the photographed image, the two-dimensional image mapping relationship between the photographed image and the virtual image in the current field of view of the user is determined by means of the pre-obtained calibration parameters, wherein the virtual image is the image to be projected by the display device, and the entity identification point is projected into the virtual image according to the two-dimensional image mapping relationship, wherein the virtual marker in the virtual image is aligned with the entity reference object in the line-of-sight focusing area.

In the present disclosure, after the calibration parameters are obtained by means of performing calibration in advance, a real scenario in the line-of-sight focusing area outside the vehicle is photographed by a photographing apparatus, and the entity identification point of the photographed picture content is projected onto the virtual image, so that the virtual marker in the virtual image in the field of view of the user at the current moment is aligned with the entity reference object in the line-of-sight focusing area, and the virtual image in the eyes of the user is associated with the real scenario covered by the virtual image in the eyes of the user, thereby realizing a virtual-real alignment "immersive" augmented reality experience effect, improving the experience and use interest of the user, and further solving the technical problem in related arts that a driver and a passenger cannot obtain good virtual-real alignment "immersive" augmented reality experience while moving the line of sight, thus reducing the use interest of the driver and the passenger.

In the present disclosure, by means of the virtual calibration pattern and the entity calibration pattern, a two-dimensional image pixel correspondence between an image collected by the dashcam in the field of view of the user and a virtual image displayed by the display device may be established without performing three-dimensional reconstruction, and may be realized just by means of turning on and turning off the display device, thereby not only being simple in operation, but also improving the calibration speed, and greatly reducing the requirements for the computing power of hardware.

In the present disclosure, by means of mounting the human eye simulation auxiliary camera at a human eye location to simulate human eyes, calibration process industrialization is realized, and the use scenarios are greatly enriched.

### Brief Description of the Drawings

The drawings described herein are used to provide a further understanding of the present disclosure and constitute a part of the present disclosure, and exemplary embodiments of the present disclosure and descriptions thereof are used to explain the present disclosure, and do not constitute improper limitations on the present disclosure. In the drawings:
Fig. 1 is a block diagram of a hardware structure of a computer terminal (or a mobile device) for implementing an alignment method for a display device according to an embodiment of the present application;
Fig. 2 is a flowchart of an optional alignment method for a display device according to an embodiment of the present application;
Fig. 3 is a first schematic scenario diagram of an optional alignment method for a display device according to an embodiment of the present application;
Fig. 4 is an optional schematic diagram of the basic principle of pinhole imaging in three-dimensional vision according to an embodiment of the present application;
Fig. 5 is a second schematic scenario diagram of an optional alignment method for a display device according to an embodiment of the present application;
Fig. 6 is a third schematic scenario diagram of an optional alignment method for a display device according to an embodiment of the present application;
Fig. 7 is an optional alignment effect diagram according to an embodiment of the present application; and
Fig. 8 is a schematic diagram of an alignment apparatus for a display device according to an embodiment of the present application.

### Detailed Description of the Embodiments

In order to make those skilled in the art better understand the solutions of the present application, a clear and complete description of technical solutions in the present disclosure will be given below, in combination with the drawings in the present disclosure. Apparently, the embodiments described below are merely a part, but not all, of the embodiments of the present disclosure.

It should be noted that, the terms "first" and "second" and the like in the description, claims and the above-mentioned drawings of the present disclosure are used for distinguishing similar objects, and are not necessarily used for describing a specific sequence or precedence order. It should be understood that the data used in this way may be interchanged under appropriate circumstances, so that various embodiments in the present disclosure described herein may be implemented in a sequence other than those illustrated or described herein. Furthermore, the terms "including" and "having", and any variations thereof are intended to cover non-exclusive inclusions, for example, processes, methods, systems, products or devices including a series of steps or units are not necessarily limited to those clearly listed steps or units, but may include other steps or units that are not clearly listed or are inherent to these processes, methods, products or devices.

First, some nouns or terms appearing during the process of describing various embodiments of the present disclosure are applicable to the following explanations:
An augmented reality head-up display (AR-HUD): the display is located in front of an instrument panel in front of the field of view of a driver, or the display is covered on the windshield, a projection device displays the content of a virtual image on a virtual image plane of the augmented reality head-up display, and the content of the virtual image is associated with a real scenario covered by the virtual image, such as prompt, marking, transparency, and the like.

A driver monitor system (DMS): used for detecting behaviors such as eye closing, blinking, gaze direction, head movement and the like of the driver by means of a visual method.

Augmented reality (AR): used for generating a virtual object that does not exist in a real environment by means of a computer graphics technology and a visualization technology, and "embedding" the virtual object into the real environment by means of a display technology.

Virtual-real alignment: the virtual image generated in the augmented reality is aligned with the real scenario.

Line-of-sight following movement: when the driver moves the line of sight, the present application may calculate, in real time, the location where the virtual image of the AR-HUD should be noted, so that the virtual image can always be aligned with the real scenario in the line of sight of the driver.

**The** following embodiments of the present application may be applied to various carriers loaded with augmented reality head-up displays, and the types of the carrier include, but are not limited to, bicycles, automobiles, driving simulators, AR windows, and the like, and may also be applied to various AR projection devices that are not fixed with geometric poses of users, for example, naked eyes AR, and the like.

**The** present application provides a virtual-real alignment technology for line-of-sight following movement of an AR-HUD, and a calibration algorithm thereof. After calibration is performed according to calibration steps in the present application, a driver monitor system may calculate a gaze point of a driver at the current moment, a vehicle-mounted computer calculates, by means of the gaze point, a picture, in a dashcam, of an out-of-vehicle real scenario seen by the driver at the current moment, and further projects the picture in the dashcam onto a virtual image of the AR-HUD according to the alignment method provided in the embodiments of the present application, so that the picture of the virtual image of the AR-HUD in the field of view of the driver at the current moment can completely cover the out-of-vehicle real scenario, thereby achieving virtual-real alignment "immersive" augmented reality experience. The present application provides a virtual-real alignment model for moving with the line of sight of the driver, the virtual-real alignment model may balance the requirements of the computing power, the cost and the user experience, requires neither a three-dimensional reconstruction process nor complex internal and external camera parameter calibration, and may achieve the frame rate of a camera in terms of real-time performance of mainframe head units.

### Embodiment 1

According to the embodiments of the present application, further provided is an embodiment of an alignment method for a display device. It should be noted that the steps illustrated in the flowcharts of the drawings may be executed in a computer system such as a group of computer-executable instructions, and although a logical order is illustrated in the flowcharts, in some cases, the steps illustrated or described may be executed in a sequence different from that herein.

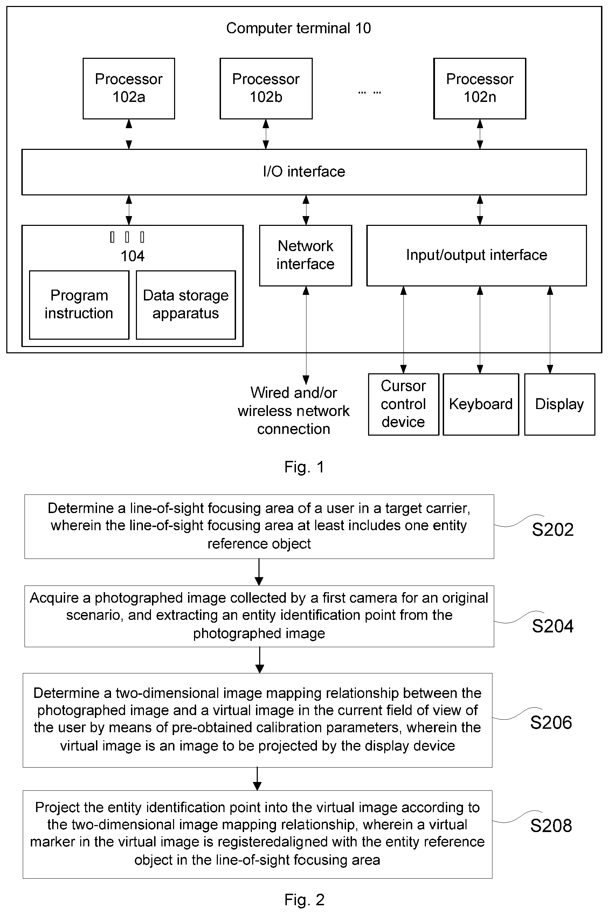

The method embodiment provided in Embodiment 1 of the present application may be executed in a mobile terminal, a computer terminal, or a similar computing apparatus. Fig. 1 illustrates a block diagram of a hardware structure of a computer terminal (or a mobile device) for implementing an alignment method for a display device. As shown in Fig. 1, the computer terminal 10 (or the mobile device 10) may include one or more (illustrated as 102a, 102b......, 102n in the figure) processors 102 (the processor 102 may include, but is not limited to, a processing apparatus such as a microprogrammed control unit (MCU) or a field-programmable gate array (FPGA)), a memory 104 for storing data, and a transmission module 106 for a communication function. In addition, the computer terminal 10 may further include: a display, an input/output interface (I/O interface), a universal serial bus (USB) port (which may be included as one of the ports of the I/O interface), a network interface, a power supply, and/or a camera. Those of ordinary skilled in the art can understand that, the structure shown in Fig. 1 is merely an example, and does not limit the structure of the electronic apparatus. For example, the computer terminal 10 may further include more or fewer components than those shown in Fig. 1, or have a configuration different from that shown in Fig. 1.

It should be noted that, the one or more processors 102 and/or other data processing circuits described above may generally be referred to herein as a "data processing circuit". The data processing circuit may be embodied in whole or in part as software, hardware, firmware, or any other combination. In addition, the data processing circuit may be a single independent processing module, or entirely or partially combined into any one of other elements in the computer terminal 10 (or the mobile device). As involved in the embodiments of the present application, the data processing circuit is used as a processor control (e.g., selection of a terminal path of a variable resistor connected with the interface).

The memory 104 may be used for storing software programs and modules of application software, for example, a program instruction/data storage apparatus corresponding to the alignment method for the display device in the embodiment of the present application, the processor 102 executes various functional applications and data processing, that is, implements a vulnerability detection method of the application program mentioned above, by means of running the software programs and the modules stored in the memory 104. The memory 104 may include a high-speed random access memory, and may further include a non-volatile memory, such as one or more magnetic storage apparatuses, flash memories, or other non-volatile solid-state memories. In some instances, the memory 104 may further include memories that are disposed remotely relative to the processor 102, and these remote memories may be connected to the computer terminal 10 by a network. Instances of the above network include, but are not limited to, the Internet, an intranet, a local area network, a mobile communication network, and combinations thereof.

The transmission apparatus 106 is used for receiving or sending data via a network. Specific examples of the above network may include a wireless network provided by a communication provider of the computer terminal 10. In one instance, the transmission apparatus 106 includes a network interface controller (NIC), which may be connected with other network devices through a base station, so as to communicate with the Internet. In one instance, the transmission apparatus 106 may be a radio frequency (RF) module, which is used for communicating with the Internet in a wireless manner.

The display may be, for example, a touch screen type liquid crystal display (LCD), which may enable a user to interact with a user interface of the computer terminal 10 (or the mobile device).

According to the embodiments of the present application, provided is an embodiment of an alignment method for a display device. It should be noted that the steps illustrated in the flowcharts of the drawings may be executed in a computer system such as a group of computer-executable instructions, and although a logical order is illustrated in the flowcharts, in some cases, the steps illustrated or described may be executed in a sequence different from that herein.

Fig. 2 is a flowchart of an optional alignment method for a display device according to an embodiment of the present application, and as shown in Fig. 2, the method includes the following steps:
Step S202, a line-of-sight focusing area of a user in a target carrier is determined, wherein the line-of-sight focusing area at least includes one entity reference object;
step S204, a photographed image collected by a first camera for an original scenario is acquired, and an entity identification point is extracted from the photographed image;
step S206, a two-dimensional image mapping relationship between the photographed image and a virtual image in the current field of view of the user is determined by means of pre-obtained calibration parameters, wherein the virtual image is an image to be projected by the display device; and
step S208, the entity identification point is projected into the virtual image according to the two-dimensional image mapping relationship, wherein a virtual marker in the virtual image is aligned with the entity reference object in the line-of-sight focusing area.

By means of the above steps, the line-of-sight focusing area of the user in the target carrier may be determined at first, wherein the line-of-sight focusing area at least includes one entity reference object, the photographed image collected by the first camera for the original scenario is acquired, the entity identification point is extracted from the photographed image, the two-dimensional image mapping relationship between the photographed image and the virtual image in the current field of view of the user is determined by means of the pre-obtained calibration parameters, wherein the virtual image is the image to be projected by the display device, and the entity identification point is projected into the virtual image according to the two-dimensional image mapping relationship, wherein the virtual marker in the virtual image is aligned with the entity reference object in the line-of-sight focusing area. In the embodiment, after the calibration parameters are obtained by means of performing calibration in advance, a real scenario in the line-of-sight focusing area of the vehicle is photographed by a photographing apparatus, and the entity identification point of the photographed picture content is projected onto the virtual image, so that the virtual marker in the virtual image in the field of view of the user at the current moment is aligned with the entity reference object in the line-of-sight focusing area, and the virtual image in the eyes of the user is associated with the real scenario covered by the virtual image in the eyes of the user, thereby realizing a virtual-real alignment "immersive" augmented reality experience effect, improving the experience and use interest of the user, and further solving the technical problem in related arts that a driver and a passenger cannot obtain good virtual-real alignment "immersive" augmented reality experience while moving the line of sight, thus reducing the use interest of the driver and the passenger.

In the embodiment of the present application, a vehicle carrier is taken as an example for schematic description, wherein an AR-HUD is installed in front of an instrument panel behind a steering wheel right ahead of a driver, a virtual image picture is projected onto a virtual image plane where the AR-HUD is located, and a dashcam (denoted as Cam_{adas}) is installed at a rear view mirror in the vehicle and faces the forward direction of the vehicle.

In some embodiments, the alignment method for the display device may be applied to a vehicle-mounted augmented reality system, and the display device is an augmented reality head-up display (AR-HUD).

The embodiment of the present application will be described in detail below with reference to various steps.

Step S202, a line-of-sight focusing area of a user in a target carrier is determined, wherein the line-of-sight focusing area at least includes one entity reference object.

In the embodiment of the present application, the target carrier includes, but is not limited to, a bicycle, an automobile, a driving simulator, an AR window, and the like, the line-of-sight focusing area is an area for mainly viewing an out-of-vehicle real scenario, which may be observed in the field of view of the user, and the entity reference object includes, but is not limited to, a reference object that may assist the user in driving decision making in any scenario such as a lane line, a road sign, a pedestrian, a front vehicle, etc.

In some embodiments, the step of determining the line-of-sight focusing area of the user in the target carrier includes: a focusing gaze line of the user in front of the target carrier is determined on the basis of coordinates of a line-of-sight placement subject of the user; intersection processing is performed on the focusing gaze line and a plane where the ground in front of the target carrier is located, so as to obtain a gaze location point of the user; and the line-of-sight focusing area of the user in the target carrier is determined on the basis of the gaze location point.

In one optional implementation, the coordinates of the line-of-sight placement subject of the user are tracked by using a driver monitor system (DMS), eye coordinates of the user at the current moment (that is, the coordinates of the line-of-sight placement subject ) are calculated by using the driver monitor system, and then the focusing gaze line from the eyes of the user to the ground or the entity reference object in front of the target carrier may be determined to obtain the gaze location point of the user. In the embodiment of the present application, the method for obtaining the line of sight and a point of sight from a collected line-of-sight placement subject of the user is not limited, the line of sight and the point of sight of the user may be determined on the basis of a corneal pupil model or on the basis of deep learning. Similarly, in the embodiment of the present application, the method for determining the line-of-sight focusing area in the field of view of the user on the basis of the gaze location point is not limited, and a traditional geometric method or deep learning may be utilized.

Step S204, a photographed image collected by a first camera for an original scenario is acquired, and an entity identification point is extracted from the photographed image.

In the embodiment of the present application, the entity identification point is a pixel point on the entity reference object, taking a driving scenario as an example, the entity reference object may refer to an entity object on a road, including, but not limited to, a reference object that may assist the user in driving decision making in any scenario such as a lane line, a road sign, a pedestrian, a front vehicle, etc. Since the actual reference object contains rich scenario information, decision making of the user often depends on the actual reference object in the scenario, therefore scenario information contained in the actual reference object is actively extracted to provide a possibility for immersive guidance.

Step S206, a two-dimensional image mapping relationship between the photographed image and a virtual image in the current field of view of the user is determined by means of pre-obtained calibration parameters, wherein the virtual image is an image to be projected by the display device.

In some embodiments, in the present embodiment, the calibration parameters may be determined through a virtual-real alignment calibration method and in combination with a human eye simulation auxiliary camera according to location states of the display device and the eyes of the user. Specifically, in a calibration process, the locations of human eyes are simulated by using the human eye simulation auxiliary camera, so that the coordinates of the eyes of the user in the space can be accurately quantified, the calibration precision can be ensured while the calibration efficiency is improved, and a calibration industrialization process is realized. If human eye calibration is directly used, the user cannot be fixed at a calibration location, and the spatial range of calibration is limited, which affects the accuracy of the calibration parameters.

In an actual use scenario, different users have different height requirements for the display device, so that the height of the display device is not fixed; and similarly, in a use process, the line of sight of the user is not kept unchanged, and a sitting posture change, a head movement, scenario bumping and the like may all lead to changes in the locations of the eyes and the line of sight of the user. In the present embodiment, by means of determining a correspondence between the eyes of the user and the calibration parameters of the display device at any location, a virtual-real alignment state between the virtual image of the display device and the real scenario is always maintained along with movement of the line of sight, and is not terminated due to a change in the sitting posture, the head movement of the user, or an adjustment of the display device.

In another optional implementation, the alignment method further includes: when the locations of the display device and the eyes of the user are maintained at fixed locations, the calibration parameters are determined at the fixed locations through a virtual-real turning-on and turning-off calibration method and in combination with the human eye simulation auxiliary camera; or, when at least one of the locations of the display device and the eyes of the user are changed, the device of which the location is changed is adjusted to a plurality of different calibration locations, the virtual-real turning-on and turning-off calibration method is repeated, a normalized parameter calibration correspondence is determined, and the calibration parameters are determined according to an actual location of the device and the normalized parameter calibration correspondence.

In some embodiments, the device of which the location is changed includes at least one of the display device and the human eye simulation auxiliary camera.

In some embodiments, the actual locations of the display device and the eyes of the user are acquired by the driver monitor system.

In some embodiments, the calibration parameters include: a first two-dimensional image mapping relationship between a first image collected by a first camera and a second image collected by the human eye simulation auxiliary camera, and a second two-dimensional image mapping relationship between a third image collected by the human eye simulation auxiliary camera and a virtual calibration pattern. Specifically, in the present application, the sequence of determining the calibration parameters is not limited, so that the calibration parameters can be calculated in succession or in parallel.

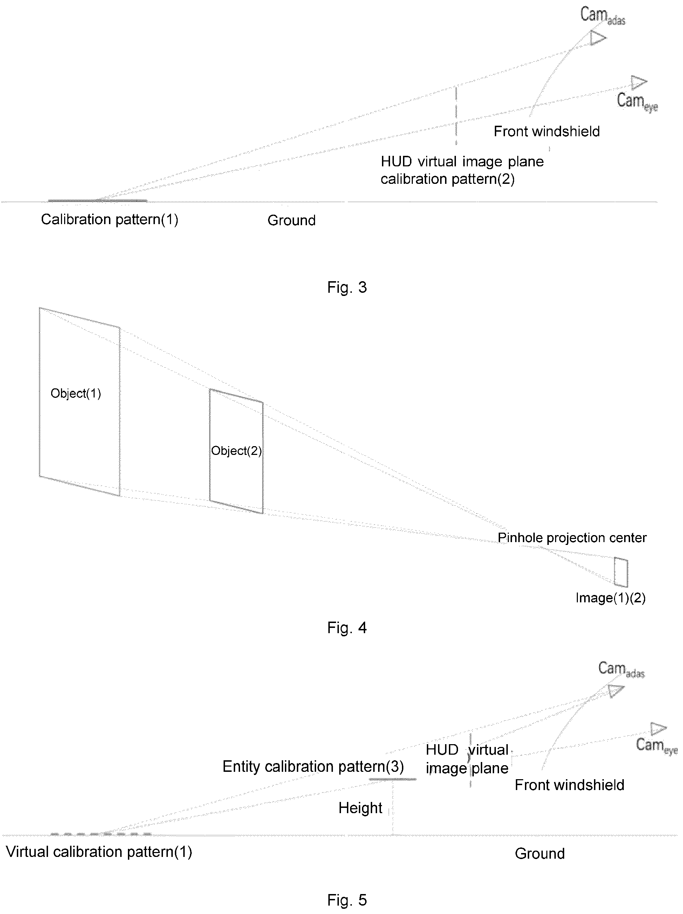

In the embodiment of the present application, the calibration parameters are obtained in advance by means of a calibration operation. Fig. 3 is a schematic scenario diagram of an optional alignment method for a display device according to an embodiment of the present application, and as shown in Fig. 3, following objects need to be prepared for a calibration: an entity calibration pattern (1), of which form is not limited (e.g., a calibration board, calibration cloth, a ground spray printing calibration pattern and the like, and style of the calibration pattern and content displayed on the pattern are not specifically limited); a virtual calibration pattern (2), of which resolution is consistent with resolution of the virtual image of the AR-HUD, and which may be displayed by the AR-HUD; and an auxiliary calibration camera (in the present embodiment, it refers to the human eye simulation auxiliary camera, which is denoted as Cam_{eye}), wherein the style of the calibration pattern includes, but is not limited to: a checkerboard, a dot grid, a graphic code (a one-dimensional code, a two-dimensional code), and the like. The Cam_{eye} is installed at a human eye location for simulating human eyes, the entity calibration pattern (1) is paved on the ground in front of the vehicle, feature points in the entity calibration pattern (1) are distinguishable in the auxiliary calibration camera Cam_{eye} and a main calibration camera Cam_{adas} (in the present embodiment, it refers to the first camera, which is configured to photograph an out-of-vehicle real scenario and may be located at an installation location of the dashcam, and type of the first camera includes, but is not limited to: a visible light camera, an infrared camera, and the like), and feature points in the virtual calibration pattern (2) are distinguishable in the Cam_{eye}.

The calibration manners in the present embodiment include a plurality of cases, each calibration manner is described below, and the calibration manners in the present embodiment may be combined with each other for use.

### (1) First calibration manner: turning-on and turning-off calibration of the display device

In some embodiments, the step: determining the calibration parameter through the virtual-real alignment calibration method and in combination with the human eye simulation auxiliary camera, includes: by means of controlling the turn-on and turn-off of the display device, and in combination with the entity calibration pattern and a virtual calibration pattern, the calibration parameters are determined according to images captured by the human eye simulation auxiliary camera and the first camera.

In the present embodiment, the display device may include, but is not limited to, an AR-HUD device, and the present embodiment is schematically described by using the virtual image plane of the AR-HUD device.

In some embodiments, the step: by means of controlling the turn-on and turn-off of the display device, and in combination with the entity calibration pattern and the virtual calibration pattern, determining the calibration parameters according to the images captured by the human eye simulation auxiliary camera and the first camera, includes: after the display device is turned off, a third two-dimensional image mapping relationship between the first image collected by the first camera and the second image collected by the human eye simulation auxiliary camera is determined in combination with the entity calibration pattern; after the display device is turned on, a fourth two-dimensional image mapping relationship between the third image collected by the human eye simulation auxiliary camera and the virtual calibration pattern is determined in combination with the virtual calibration pattern; and the third two-dimensional image mapping relationship and the fourth two-dimensional image mapping relationship are represented as the calibration parameters.

In some embodiments, the entity calibration pattern is placed in front of the target carrier, and the virtual calibration pattern is displayed on the virtual image plane projected by the display device, wherein the entity calibration pattern includes at least one entity feature point, and the virtual calibration pattern includes at least one virtual feature point.

As shown in Fig. 3, the virtual image plane of the AR-HUD may be turned off at first, the calibration pattern (1) (i.e., the entity calibration pattern located on the ground) is photographed by using the Cam_{adas} and the Cam_{eye}, and a two-dimensional image transformation relationship H_{adas2eye} (i.e., the third two-dimensional image mapping relationship) therebetween is calculated according to the feature points of the photographed entity calibration pattern (1); then, the virtual image plane of the AR-HUD is turned on, the virtual calibration pattern (2) (i.e., the virtual image plane displayed by the display device, the virtual image plane is located in front of the front windshield and is perpendicular to the ground) is photographed by using the Cam_{eye}, a two-dimensional image transformation relationship H_{eye2image} (i.e., the fourth two-dimensional image transformation relationship) between the feature points obtained by photographing the virtual calibration pattern (2) and feature points (i.e., third feature points in the virtual image plane) displayed on the virtual image plane of the AR-HUD is calculated according to the feature points of the photographed virtual calibration pattern (2) (i.e., fourth feature points of the third image), and two groups of calibration parameters are obtained at last, that is, the two-dimensional image transformation relationship H_{adas2eye} and the two-dimensional image transformation relationship H_{eye2image}. In the embodiment of the present application, the method for extracting the feature points, and the method for determining the two-dimensional image transformation relationships based on the feature points are not limited, a traditional method may be used, for example, description information of the feature points are extracted, to error matching is eliminate by Ransac(Random Sample Consensus), and transformation relationship is solved through an equation, and a depth estimation transformation relationship may also be used, for example, a HomographyNet. In addition, the entity calibration pattern and the virtual calibration pattern are respectively used when the two groups of calibration parameters are acquired, and the feature points do not need to be in one-to-one correspondence, and thus the styles of the entity calibration pattern and the virtual calibration pattern are not required to be the same.

In the alignment steps after the two groups of calibration parameters are acquired, the Cam_{adas} collects a scenario image, extracts a pixel point of a reference object from the scenario image, for example, a pixel point where a lane line is located, which is denoted as p, and calculates an illuminated pixel point p' = H_{adas2eye} * H_{eye2image} * p in the AR-HUD by means of the two-dimensional image transformation relationship H_{adas2eye} and the two-dimensional image transformation relationship H_{eye2image}. The illuminated pixel point is a virtual lane line displayed in the display device, that is, in the field of view of the current location of the user, the virtual lane line displayed by the display device covers a real white lane line.

In the embodiment of the present application, by means of the virtual calibration pattern and the entity calibration pattern, a two-dimensional image pixel correspondence between an image collected by the dashcam in the field of view of the user and the virtual image displayed by the display device may be established without performing three-dimensional reconstruction, and may be realized just by means of turning on and turning off the display device, thereby not only being simple in operation, but also improving the calculation efficiency and the calibration speed, and greatly reducing the requirements for the computing power of hardware. In addition, by means of mounting the human eye simulation auxiliary camera at the human eye location to simulate the human eyes, calibration process industrialization is realized, and the use scenarios are greatly enriched.

### (2) Second calibration manner: equivalent page calibration

In the embodiment of the present application, if a real ground is used as a real scenario area covered by the AR-HUD in the calibration operation, in an actual situation, the covered real ground is about 30-100 meters away from the head of the vehicle, so the calibration work has extremely high requirements for the space of the site and the size of the entity calibration pattern (1). In order to further adapt to the actual situations of different calibration scenarios, in the embodiment of the present application, a spatial distance required by the entity calibration pattern (1) in the calibration process is shortened by using an equivalent entity calibration pattern.

In some embodiments, the alignment method further includes: the entity calibration pattern is replaced with an equivalent entity calibration pattern that is higher than and parallel to the entity calibration pattern in the field of view of the human eye simulation auxiliary camera.

Fig. 4 is an optional schematic diagram of the basic principle of pinhole imaging in three-dimensional vision according to an embodiment of the present application, as shown in Fig. 4, when an object (1) with a greater object distance and a greater size is parallel to an object (2) with a smaller object distance and a smaller size, and when an object height ratio and an object distance ratio of the object (1) are consistent with those of the object (2), imaging (1) and imaging (2) on the same imaging plane are consistent through a pinhole projection center. In other words, according to the basic principle of pinhole imaging in three-dimensional vision, when a greater object with the greater object distance is parallel to the smaller object with the smaller object, and when the object height ratio and the object distance ratio of the greater object are consistent with those of the smaller object, the imaging via a pinhole optical system is consistent. Therefore, according to the principle and according to the actual conditions of different calibration sites, the distance from the entity calibration pattern (1) to the calibrated vehicle may be shortened during the calibration process of the AR-HUD.

In some embodiments, the step: by means of controlling the turn-on and turn-off of the display device, and in combination with the equivalent entity calibration pattern and the virtual calibration pattern, determining the calibration parameters according to the images captured by the human eye simulation auxiliary camera and the first camera, includes: after the display device is turned off, an equivalent virtual calibration pattern located on the ground is restored by means of the equivalent entity calibration pattern, and the equivalent virtual calibration pattern is projected to a fourth image generated by the first camera, the human eye simulation auxiliary camera collects a fifth image of the equivalent entity calibration pattern, and a fifth two-dimensional image mapping relationship between the fourth image and the fifth image is determined; after the display device is turned on, a sixth two-dimensional image mapping relationship between a sixth image collected by the human eye simulation auxiliary camera and the virtual calibration pattern is determined in combination with the virtual calibration pattern; and the fifth two-dimensional image mapping relationship and the sixth two-dimensional image mapping relationship are represented as the calibration parameters.

In some embodiments, the step: restoring, by means of the equivalent entity calibration pattern, the equivalent virtual calibration pattern located on the ground, and projecting the equivalent virtual calibration pattern to the fourth image generated by the first camera, includes: a height-above-ground value and a preset zoom ratio of the equivalent entity calibration pattern are determined according to first spatial poses of the first camera, the human eye simulation auxiliary camera and the equivalent entity calibration pattern, which are obtained by calibration; according to the height-above-ground value and the preset zoom ratio, and in combination with the light propagation principle, the equivalent entity calibration pattern is restored to the equivalent virtual calibration pattern located on the ground, and a second spatial pose of the virtual calibration pattern is calculated; and the virtual calibration pattern is projected to an imaging plane of the first camera in combination with the second spatial pose, so as to generate the fourth image.

Specifically, on the basis of the first calibration manner, according to the pinhole imaging principle, the entity calibration pattern is replaced with the equivalent entity calibration pattern that is higher than and parallel to the entity calibration pattern in the field of view of the human eye simulation auxiliary camera. Fig. 5 is a second schematic scenario diagram of an optional alignment method for a display device according to an embodiment of the present application, as shown in Fig. 5, in the embodiment of the present application, an "equivalent entity calibration pattern (3)" is introduced to replace the entity calibration pattern (1), the entity calibration pattern (1) is replaced with the equivalent entity calibration pattern (3) that is higher than and parallel to the entity calibration pattern (1) in the field of view of the Cam_{eye}, the zoom ratio of the equivalent entity calibration pattern (3) to the entity calibration pattern (1) is equivalent to the ratio of the height-above-ground of the equivalent entity calibration pattern (3) to the height-above-ground of the Cam_{eye}, and may also be equivalent to the ratio of a horizontal distance between the entity calibration pattern (1) and the Cam_{eye} to a horizontal distance between the equivalent entity calibration pattern (3) and the Cam_{eye}, the remaining arrangements and requirements of the calibration device are consistent with those in Fig. 3, and thus no details are repeated herein again. According to the pinhole imaging principle, the calibration working distance may be greatly shortened, the requirements for the calibration sites are reduced, and meanwhile, the size of the equivalent entity calibration pattern (3) relative to the entity calibration pattern (1) may be reduced.

Since the equivalent entity calibration pattern (3) is only adapted to the field of view of the Cam_{eye}, the projection relationship thereof does not satisfy the field of view of the Cam_{adas}, so that the pose relationship between the Cam_{eye} and the entity calibration pattern (3), and the pose relationship between the Cam_{adas} and the entity calibration pattern (3) can be respectively calculated, an equivalent virtual calibration pattern (1) is restored according to the height-above-ground of the equivalent entity calibration pattern (3) and is re-projected into the Cam_{adas}, wherein the re-projection refers to projecting a pixel point of the equivalent entity calibration pattern (3) in the field of view of the Cam_{eye} into the field of view of the Cam_{adas}, so as to generate a pixel point of a new image. As shown in Fig. 5, internal camera parameters (i.e., parameters related to the characteristics of the camera itself, such as a focal length and a pixel size of the camera) of the first camera Cam_{eye} and the human eye simulation auxiliary camera Cam_{adas} may be independently calibrated, and the camera calibration method is not limited in the present application. The spatial poses (i.e., the first spatial poses) of the Cam_{eye}, the Cam_{adas} and the equivalent entity calibration pattern (3) are calibrated on the basis of the internal camera parameters, the spatial poses not only provides the location relationships between the devices, but may further provide information of the height-above-ground h and the preset zoom ratio of the equivalent entity calibration pattern (3); and according to the height-above-ground h (referring to the height-above-ground value of the equivalent entity calibration pattern in the present embodiment) of the equivalent entity calibration pattern (3) and the principle of light propagating along a line, the spatial pose (referring to the second spatial pose in the present embodiment) of the virtual calibration pattern (1) located on the ground is calculated, and finally, the feature points of the virtual calibration pattern (1) are re-projected to the Cam_{adas} to obtain the new image (i.e., projecting to the imaging plane of the first camera to generate the fourth image).

The alignment steps after the two groups of calibration parameters are acquired are consistent with the steps included in the first calibration method, and thus details are not repeated herein again. In the present embodiment, in combination with the geometric relationship and the pinhole imaging principle, a virtual ground is calculated by means of introducing an equivalent calibration plane, and re-projection is performed, thereby greatly reducing the calibration working distance, and reducing the requirements for the calibration sites.

### (3) Third calibration manner: variable space calibration

When the locations of the display device and the eyes of the user are kept at fixed locations, the calibration parameters may be acquired at the fixed locations in the first calibration manner and the second calibration manner.

However, the line of sight of the user is not kept unchanged, and a sitting posture change, a head movement, scenario bumping and the like may all lead to changes in the locations of the eyes and the line of sight of the user, when at least one of the locations of the display device and the eyes of the user is changed, the device of which the location is changed is adjusted to a plurality of different locations, and the first calibration manner and the second calibration manner are repeated at the plurality of different locations to determine the normalized parameter calibration correspondence, and the calibration parameters are determined according to the actual location of the device and the normalized parameter calibration correspondence.

In some embodiments, the normalized parameter calibration correspondence is a mapping relationship between any normalized parameter and a calibration parameter that is in one-to-one correspondence with the normalized parameter, and the normalized parameter is a ratio of a location movement amount of at least one of the display device and the human eye simulation auxiliary camera to a variable stroke.

In some embodiments, the step: when the locations of the display device and/or the eyes of the user are changed, adjusting the device of which the location is changed to the plurality of different calibration locations, repeating the virtual-real turning-on and turning-off calibration method, determining the normalized parameter calibration correspondence, and determining the calibration parameter according to the actual location of the device and the normalized parameter calibration correspondence, includes: the device of which the location is changed is adjusted to at least two different calibration locations in a variable space, the virtual-real turning-on and turning-off calibration method is repeated, and the normalized parameter calibration correspondence is determined; and a normalized location parameter in the variable space is determined on the basis of the actual location of the device, and the calibration parameters are determined according to the normalized location parameter and the normalized parameter calibration correspondence.

In the present embodiment, the type of the variable space includes, but is not limited to, a variable linear stroke, a variable planar stroke, and a variable three-dimensional space stroke. In the present embodiment, a variable location (stroke) is represented by using a normalized parameter, and the calibration parameter corresponding to any normalized parameter may be fitted by means of several groups of pre-calibrated correspondences of "normalized parameters-calibration parameters". For the device of which the location is changed, the method for acquiring stroke information is not limited in the embodiment of the present application, for example, may be provided by the detection of an external sensor.

If the variable location is approximately linear (e.g., up and down adjustment of the virtual image plane of the AR-HUD), a minimum value of "several" mentioned above should be greater than or equal to 2, and the several groups of correspondences are not concurrent at the same time; if the variable location is an approximate area array (e.g., movement of the human eyes in a DMS camera), the minimum value of "several" mentioned above should be greater than or equal to 3, and the several groups of correspondences are not collinear at the same time; and further, if the variable location is an approximate three-dimensional range (e.g., simulating the movement of the human eye camera in an eye box), the minimum value of "several" mentioned above should be greater than or equal to 4, and the several groups of correspondences are not coplanar at the same time.

In some embodiments, when the variable space is a variable linear stroke, the alignment method includes: the device is adjusted to at least two different calibration locations in the variable linear stroke, the virtual-real turning-on and turning-off calibration method is repeated, and the normalized parameter calibration correspondence is determined, wherein the at least two different calibration locations include: a highest display reference location and a lowest display reference location of the device in the variable linear stroke.

In some embodiments, the step: adjusting the device of which the location is changed to at least two different calibration locations in the variable space, repeating the virtual-real turning-on and turning-off calibration method, and determining the normalized parameter calibration correspondence, includes: the device of which the location is changed is adjusted to at least two different calibration locations in the variable space, and the virtual-real turning-on and turning-off calibration method is repeated at the different calibration locations to obtain a calibration parameter group, wherein the calibration parameter group includes calibration parameters and calibration locations, which are in-one-to-one correspondence; a normalized parameter group is determined according to all the calibration locations and the variable space; and the normalized parameter calibration correspondence is determined by means of fitting the calibration parameter group and the normalization parameter group.

Taking the movement of the AR-HUD as an example, the AR-HUD may adjust N different strokes on the virtual image plane (wherein N≥2, indicating that there should be at least two strokes, that is, a highest stroke and a lowest stroke), then a calibration work is performed to obtain N groups of calibration parameters, and the normalized parameter calibration correspondence may be determined by means of the N groups of calibration parameters and N values of 0-1 respectively corresponding to normalized strokes on the virtual image plane of the AR-HUD. Then, the normalized stroke of the virtual image plane of the AR-HUD is used as a single independent variable (i.e., the AR-HUD may move up and down within a certain range, and the movement proportion is the single independent variable, for example, if the movement range is 10 mm, the movement proportion of movement by 1 mm is 0.1 (i.e., the single independent variable is 0.1)), and when the virtual image plane of the AR-HUD moves to the location, the corresponding calibration parameters are determined in combination with the normalized parameter calibration correspondence. Similarly, when the eyes of the user move on the variable linear stroke, the calibration parameters corresponding to any location may be determined by means of simulating the movement of the human eyes via the human eye simulation auxiliary camera and by means of the above method.

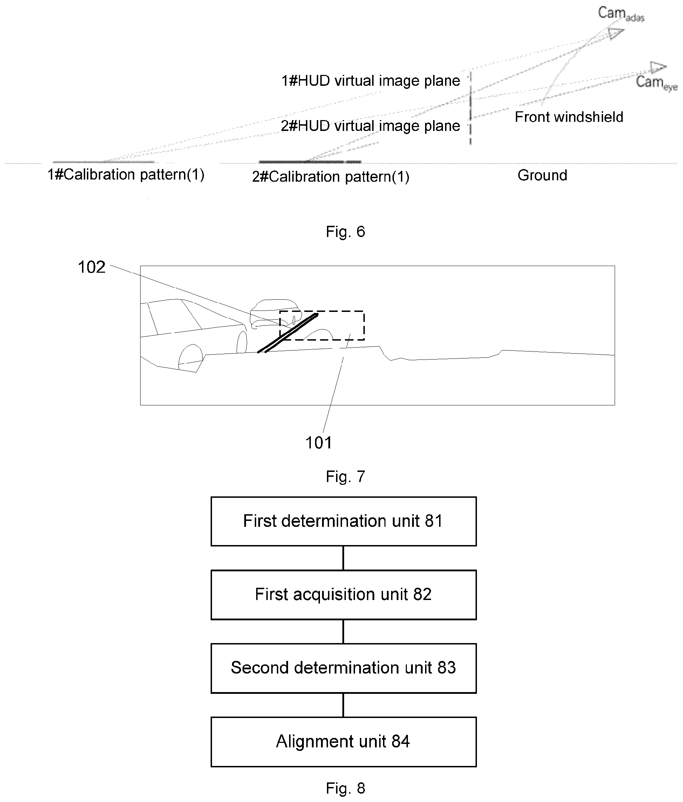

Fig. 6 is a third schematic scenario diagram of an optional alignment method for a display device according to an embodiment of the present application, as shown in Fig. 6, taking the movement of the virtual image plane of the AR-HUD as an example, in the embodiment of the present application, the location of the display device may be adjusted in the variable linear stroke, and the location of the display device is the highest display reference location when the display device is adjusted to a highest location, and is the lowest display reference location when the display device is adjusted to a lowest location. The virtual image plane of the AR-HUD is adjusted to N=2 limit strokes up and down, that is, adjusted to the highest display reference location and the lowest display reference location, when the virtual image plane of the AR-HUD is adjusted to the highest location, that is, when the value of the normalized stroke is 1, after the virtual image plane of the AR-HUD is turned off, a 1# calibration pattern (1) is photographed by using the Cam_{adas} and the Cam_{eye}, and a two-dimensional image transformation relationship H⁽¹⁾_{adas2eye} therebetween is calculated according to the feature points of the photographed real object, that is, the 1# calibration pattern (1); and then, the virtual image plane of the AR-HUD is turned on, a 1# HUD virtual image plane (i.e., the virtual image plane displayed by the display device, the virtual image plane is in front of the front windshield and is perpendicular to the ground) is photographed by using the Cam_{eye}, and a two-dimensional image transformation relationship H⁽¹⁾_{eye2image} between feature points obtained by photographing the 1# HUD virtual image plane and feature points finally displayed on the virtual image plane of the AR-HUD is calculated according to the feature points of the photographed 1# HUD virtual image plane. When the virtual image plane of the AR-HUD is adjusted to the lowest location, that is, when the value of the normalized stroke is 0, after the virtual image plane of the AR-HUD is turned off, a 2# calibration pattern (1) is photographed by using the Cam_{adas} and the Cam_{eye}, and a two-dimensional image transformation relationship H⁽²⁾_{adas2eye} therebetween is calculated according to the feature points of the photographed real object, that is, the 2# calibration pattern (1); and then, the virtual image plane of the AR-HUD is turned on, a 2# HUD virtual image plane is photographed by using the Cam_{eye}, a two-dimensional image transformation relationship H⁽²⁾_{eye2image} between feature points obtained by photographing the 2# HUD virtual image plane and feature points finally displayed on the virtual image plane of the AR-HUD is calculated according to the feature points of the photographed 2# HUD virtual image plane, and two groups of calibration parameters at the two reference locations are obtained at last, that is, the two-dimensional image transformation relationship H⁽¹⁾_{adas2eye}, the two-dimensional image transformation relationship H⁽¹⁾_{eye2image}, the two-dimensional image transformation relationship H⁽²⁾_{adas2eye}, and the two-dimensional image transformation relationship H⁽²⁾_{eye2image}. The normalized parameter calibration correspondence is determined by means of fitting the calibration parameter group and the corresponding normalized parameter group, and the mathematical method for establishing the correspondence is not limited in the present application, for example, an interpolation algorithm or a fitting algorithm is utilized.

In subsequent alignment steps, taking the movement of the stroke of the virtual image plane of the AR-HUD as an example, in the embodiment of the present application, the vehicle-mounted computer extracts a corresponding pixel point of a real scenario (e.g., a lane line) from a dashcam image (Cam_{adas}), calculates the calibration parameters of the virtual image plane of the AR-HUD in the current stroke according to the stroke of the virtual image plane of the AR-HUD at this time and the normalized parameter calibration correspondence, and maps the pixel point of the lane line in the dashcam to the pixel point on the virtual image of the AR-HUD. At this time, in the line of sight of the driver, the lane line displayed in the virtual image of the AR-HUD covers the real lane line in the line of sight of the driver, and the virtual image picture of the AR-HUD may be adjusted up and down according to the habitual line-of-sight directions of different drivers, so as to achieve virtual-real alignment.

In some embodiments, when the variable space is a variable planar stroke, the alignment method includes: the device is adjusted to at least three different calibration locations in the variable planar stroke, the virtual-real turning-on and turning-off calibration method is repeated, and the normalized parameter calibration correspondence is determined, wherein the at least three different calibration locations include: three limit reference locations of the device, which are not colinear at the same time.

In the embodiment of the present application, taking the movement of the eyes of the user as an example, the movement location of the human eye simulation auxiliary camera in a cab is photographed by using the DMS, the movement location may be approximately in a two-dimensional plane (i.e., a preset planar area), and normalized coordinates of at least three vertices of the two-dimensional plane may be set to be (0, 0), (0, 1), (1, 1).

In the embodiment of the present application, the normalized coordinates of a variable plane are illustrated by using four vertices. When the human eye simulation auxiliary camera moves to a lower left limit location in the variable planar stroke in the cab, that is, the normalized coordinates (0, 0) (i.e., a first display reference location), the DMS records the coordinates of the human eyes in the DMS camera at this time, and denotes same as d⁽⁰⁾ (i.e., first coordinates of the line-of-sight placement subject corresponds to the first display reference location); when the human eye simulation auxiliary camera moves to a lower right limit location, an upper right limit location and an upper left limit location of the variable space in the cab, that is, the normalized coordinates (0, 1), (1, 1) and (1, 0), the DMS records the coordinates of the human eyes in the DMS camera at the three locations at this time, and denote same as d⁽¹⁾ (i.e., second coordinates of the line-of-sight placement subject corresponds to a second display reference location), d⁽²⁾ (i.e., third coordinates of the line-of-sight placement subject corresponds to a third display reference location), and d⁽³⁾ (i.e., fourth coordinates of the line-of-sight placement subject corresponds to a fourth display reference location), a fitted normalized matrix Hₙₒᵣₘₐ₁ may be obtained according to the correspondences of d⁽⁰⁾, d⁽¹⁾, d⁽²⁾ and d⁽³⁾ with the normalized coordinates (0, 0), (0, 1), (1, 1) and (1, 0), and the normalized coordinates of the human eyes in the preset planar area at this time may be obtained on the basis of the coordinates of the human eyes in the DMS camera, which are recorded by the DMS, and the fitted normalized matrix Hₙₒᵣₘₐ₁.

In the embodiment of the present application, since it is difficult to quantify the movement of the human eyes, movement limit locations are used as calibration basis, that is, the first display reference location, the second display reference location, the third display reference location and the fourth display reference location are used as four limit locations; after M limit locations, where the human eyes may move in the cab and are not colinear at the same time (M≥3), are obtained, the calibration work is performed to obtain M groups of calibration parameters, wherein the M groups of calibration parameters respectively correspond to the values of M two-dimensional normalized locations of the human eyes in the cab, which are photographed by the DMS; and the normalized parameter calibration correspondence is determined by means of fitting the M groups of calibration parameters and the values of the corresponding M two-dimensional normalized locations, and the mathematical method for establishing the correspondence is not limited in the present application, for example, the interpolation algorithm or the fitting algorithm is utilized. Subsequently, the values of the two-dimensional normalized locations of the human eyes in the cab, which are photographed by the DMS, are used as single independent variables, and corresponding calibration parameters may be obtained when the human eyes are at any location in the cab.

In subsequent alignment steps, taking the movement of the human eyes as an example, in the embodiment of the present application, the vehicle-mounted computer extracts a corresponding pixel point of a real scenario (e.g., a lane line) from a dashcam image (Cam_{adas}), determines normalized parameters of the human eyes in the preset planar area according to the coordinates (two-dimensional coordinates) of the human eyes in the DMS camera at this time and in combination with the fitted normalized matrix Hₙₒᵣₘₐ₁, calculates calibration parameters of the human eyes in the current stroke according to the normalized parameters of the human eyes in the preset planar area at this time and the normalized parameter calibration correspondence, and maps the pixel point of the lane line in the dashcam to the pixel point on the virtual image of the AR-HUD. At this time, in the line of sight of the driver, the lane line displayed in the virtual image of the AR-HUD covers the real lane line in the line of sight of the driver, and the virtual image picture of the AR-HUD may be adjusted up and down according to the habitual line-of-sight directions of different drivers, so as to achieve virtual-real alignment.

In some embodiments, when the variable space is a variable three-dimensional space stroke, the alignment method includes: the device is adjusted to at least four different calibration locations in the variable three-dimensional space stroke, the virtual-real turning-on and turning-off calibration method is repeated, and the normalized parameter calibration correspondence is determined, wherein the at least four different calibration locations include: four limit reference locations of the device, which are not coplanar at the same time.

In the embodiment of the present application, the normalized parameters are calibrated with the four limit reference locations of the device, which are not coplanar at the same time, similar to the case where the variable space is a variable two-dimensional plane, the human eye simulation auxiliary camera moves to the four limit reference locations, which are not coplanar at the same time, in the variable planar stroke in the cab, repeats the virtual-real calibration method, and fits a normalized matrix Hₙₒᵣₘₐₗ₂ on the basis of the limit reference locations and the corresponding normalized coordinates, and the normalized coordinates of the human eyes in the preset space area at this time may be obtained on the basis of the coordinates of the human eyes in the DMS camera, which are recorded by the DMS, and the fitted normalized matrix Hₙₒᵣₘₐₗ₂.

Similarly, in the embodiment of the present application, since it is difficult to quantify the movement of the human eyes, movement limit locations are used as calibration basis, that is, the first display reference location, the second display reference location, the third display reference location and the fourth display reference location are used as four limit locations; after P limit locations, where the human eyes may move in the cab and are not coplanar at the same time (P≥4), are obtained, the calibration work is performed to obtain P groups of calibration parameters, wherein the P groups of calibration parameters respectively correspond to the values of P three-dimensional normalized locations of the human eyes in the cab, which are photographed by the DMS; and the normalized parameter calibration correspondence is determined by means of fitting the P groups of calibration parameters and the values of the corresponding P three-dimensional normalized locations, and the mathematical method for establishing the correspondence is not limited in the present application, for example, the interpolation algorithm or the fitting algorithm is utilized. Subsequently, the values of the three-dimensional normalized locations of the human eyes in the cab, which are photographed by the DMS, are used as single independent variables, and corresponding calibration parameters may be obtained when the human eyes are at any location in the cab.

In subsequent alignment steps, taking the movement of the human eyes as an example, in the embodiment of the present application, the vehicle-mounted computer extracts a corresponding pixel point of a real scenario (e.g., a lane line) from a dashcam image (Cam_{adas}), determines normalized coordinates (three-dimensional coordinates) of the human eyes in the preset planar area according to the coordinates of the human eyes in the DMS camera at this time and in combination with the fitted normalized matrix Hₙₒᵣₘₐₗ₂, calculates calibration parameters of the human eyes in the current stroke according to the normalized parameters of the human eyes in the preset planar area at this time and the normalized parameter calibration correspondence, and maps the pixel point of the lane line in the dashcam to the pixel point on the virtual image of the AR-HUD. At this time, in the line of sight of the driver, the lane line displayed in the virtual image of the AR-HUD covers the real lane line in the line of sight of the driver, and the virtual image picture of the AR-HUD may be adjusted up and down according to the habitual line-of-sight directions of different drivers, so as to achieve virtual-real alignment.

In the embodiment of the present application, a function for generating a calibration parameter via a single variable is established by using a mathematical algorithm, so that calibration parameters at any location of the mobile device can be obtained, and thus real-time dynamic alignment can be realized. In some embodiments, the alignment method further includes: the human eye simulation auxiliary camera is mounted by means of a mechanical arm, the location of the human eye simulation auxiliary camera is adjusted, and corresponding three-dimensional normalized coordinates are provided.

In the embodiment of the present application, the auxiliary calibration camera Cam_{eye} may be mounted by using the mechanical arm, and the mechanical arm may be controlled to simulate the up and down movement, left and right movement and front and back movement of the human eyes in a movable area in a three-dimensional space of the cab. Due to the introduction of the mechanical arm, the three-dimensional normalized coordinates (i.e., normalized coordinates in the preset planar area, for example, a certain corner in the movable area is defined to be (0, 0, 0), and then a corner farthest from this corner is (1, 1, 1)), in the movable area, of the Cam_{eye} for simulating the human eyes may be provided by the mechanical arm or a DMS camera capable of detecting depth.

In the embodiment of the present application, if the three-dimensional normalized coordinates are provided by using the mechanical arm, a transformation relationship between a mechanical arm coordinate system and a DMS camera coordinate system also needs to be calibrated, and if the three-dimensional normalized coordinates are provided by directly using the DMS camera capable of detecting depth, there is no need to calibrate the transformation relationship therebetween.

Although the embodiment of the present application merely describes the above calibration manners, combinations of any two of these calibration manners, or combinations of any three of these calibration manners, or combinations of any four of of these calibration manners, or combinations of any five of these calibration manners should also fall into the protection scope of the present embodiment.

Step S208, the entity identification point is projected into the virtual image according to the two-dimensional image mapping relationship, wherein a virtual marker in the virtual image is aligned with the entity reference object in the line-of-sight focusing area.

Fig. 7 is an optional alignment effect diagram according to an embodiment of the present application, a framework indicated by 101 in Fig. 7 is a virtual lane line displayed in the virtual image range of the AR-HUD, and the virtual lane line covers a real white lane line (102) in the field of view of the Cam_{eye}. The vehicle-mounted computer recognizes, by means of a semantic recognition algorithm (e.g., a neural network) and from an image of the Cam_{adas}, information capable of assisting the driver in driving decision making, such as a lane line, a pedestrian, a front vehicle, and the like, extracts corresponding pixels of the information from the image of the Cam_{adas}, and then maps the pixels onto the virtual image of the AR-HUD by means of a two-dimensional image transformation relationship. At this time, in the field of view of the Cam_{eye}, the lane line displayed in the virtual image of the AR-HUD covers the real lane line in the field of view of the Cam_{eye}, so that virtual-real alignment is realized.

In the embodiment of the present application, the input human eye location and the output virtual image may be processed in real time, and the real-time performance depends on the lowest frame rate among the DMS camera or the Cam_{adas} camera or a display screen of the AR-HUD.

In some embodiments, the alignment method further includes: the entity identification point is projected into the virtual image in combination with the two-dimensional image mapping relationship and the posture of the target carrier. Specifically, since there are complex situations in the actual use scenario, there is a posture change in the overall state of the target carrier, for example, when the vehicle brakes or starts, there is a head-lifting or head-lowering change corresponding to the head of the vehicle, if dependence is only made on the calibration parameters in the case of normal and stable head of the head without considering the posture of the target carrier, the scenario in the line of sight of the user is inconsistent with the scenario on the virtual image plane, and thus affecting the alignment effect. In the embodiment of the present application, the posture correction alignment of the target carrier is further combined on the basis of the two-dimensional image mapping relationship, thereby improving the precision and robustness of virtual-real alignment, and further expanding the application scenario range; and in addition, the manner of acquiring the posture of the carrier is not limited in the present application, for example, the posture of the carrier may be acquired in real time by using an external sensor.

In the embodiment of the present application, by means of the virtual calibration pattern and the entity calibration pattern, a two-dimensional image pixel correspondence between an image collected by the dashcam in the field of view of the user and the virtual image displayed by the display device may be established without performing three-dimensional reconstruction, and may be realized just by means of turning on and turning off the display device, thereby not only being simple in operation, but also improving the calculation efficiency and the calibration speed, and greatly reducing the requirements for the computing power of hardware. In addition, by means of mounting the human eye simulation auxiliary camera at the human eye location to simulate the human eyes, calibration process industrialization is realized, and the use scenarios are greatly enriched.

### Embodiment 2

An alignment apparatus for a display device provided in the present embodiment includes a plurality of implementation units, and each implementation unit corresponds to each implementation step in Embodiment 1 mentioned above.

Fig. 8 is a schematic diagram of an alignment apparatus for a display device according to an embodiment of the present application, as shown in Fig. 8, the alignment apparatus may include: a first determination unit 81, a first acquisition unit 82, a second determination unit 83, and an alignment unit 84, wherein,
the first determination unit 81 is configured to determine a line-of-sight focusing area of a user in a target carrier, wherein the line-of-sight focusing area at least includes one entity reference object;
the first acquisition unit 82 is configured to acquire a photographed image collected by a first camera for an original scenario, and extract an entity identification point from the photographed image;
the second determination unit 83 is configured to determine a two-dimensional image mapping relationship between the photographed image and a virtual image in the current field of view of the user by means of pre-obtained calibration parameters, wherein the virtual image is an image to be projected by the display device; and
the alignment unit 84 is configured to project the entity identification point into the virtual image according to the two-dimensional image mapping relationship, wherein a virtual marker in the virtual image is aligned with the entity reference object in the line-of-sight focusing area.

In the alignment apparatus for the display device, the line-of-sight focusing area of the user in the target carrier may be determined at first by the first determination unit 81, wherein the line-of-sight focusing area at least includes one entity reference object, the photographed image collected by the first camera for the original scenario is acquired and the entity identification point is extracted from the photographed image by the first acquisition unit 82, the two-dimensional image mapping relationship between the photographed image and the virtual image in the current field of view of the user is determined by the second determination unit 83 by means of the pre-obtained calibration parameters, wherein the virtual image is the image to be projected by the display device, and the entity identification point is projected into the virtual image by the alignment unit 84 according to the two-dimensional image mapping relationship, wherein the virtual marker in the virtual image is aligned with the entity reference object in the line-of-sight focusing area. In the embodiment, after the calibration parameters are obtained by means of performing calibration in advance, a real scenario in the line-of-sight focusing area of the vehicle is photographed by a photographing apparatus, and the entity identification point of the photographed picture content is projected onto the virtual image, so that the virtual marker in the virtual image in the field of view of the user at the current moment is aligned with the entity reference object in the line-of-sight focusing area, and the virtual image in the eyes of the user is associated with the real scenario covered by the virtual image in the eyes of the user, thereby realizing a virtual-real alignment "immersive" augmented reality experience effect, improving the experience and use interest of the user, and further solving the technical problem in related arts that a driver and a passenger cannot obtain good virtual-real alignment "immersive" augmented reality experience while moving the line of sight, thus reducing the use interest of the driver and the passenger.

In some embodiments, the first determination unit includes: a first determination module, configured to determine a focusing gaze line of the user in front of the target carrier on the basis of coordinates of a line-of-sight placement subject of the user; a gaze point determination module, configured to perform intersection processing on the focusing gaze line and a plane where the ground in front of the target carrier is located, so as to obtain a gaze location point of the user; and a second determination module, configured to determine the line-of-sight focusing area of the user in the target carrier on the basis of the gaze location point.

In some embodiments, the calibration parameters are determined by a virtual-real alignment calibration method according to location states of the display device and the eyes of the user and in combination with a human eye simulation auxiliary camera.

In some embodiments, the alignment apparatus further includes: a third determination unit, configured to: when the locations of the display device and the eyes of the user are maintained at fixed locations, determine, at the fixed locations, the calibration parameters through a virtual-real turning-on and turning-off calibration method and in combination with the human eye simulation auxiliary camera; or, a fourth determination unit, configured to: when the locations of the display device and/or the eyes of the user are changed, adjust the device of which the location is changed to a plurality of different calibration locations, repeat the virtual-real turning-on and turning-off calibration method, determine a normalized parameter calibration correspondence, and determine the calibration parameters according to the actual location of the device and the normalized parameter calibration correspondence.

In some embodiments, the actual locations of the display device and the eyes of the user are acquired by a driver monitor system.

In some embodiments, the calibration parameters include: a first two-dimensional image mapping relationship between a first image collected by a first camera and a second image collected by the human eye simulation auxiliary camera, and a second two-dimensional image mapping relationship between a third image collected by the human eye simulation auxiliary camera and a virtual calibration pattern.

In some embodiments, the third determination unit includes: a third determination module, configured to: by means of controlling the turn-on and turn-off of the display device, and in combination with an entity calibration pattern and the virtual calibration pattern, determine the calibration parameters according to images captured by the human eye simulation auxiliary camera and the first camera.

In some embodiments, the third determination module includes: a first determination sub-module, configured to: after the display device is turned off, determine a third two-dimensional image mapping relationship between the first image collected by the first camera and the second image collected by the human eye simulation auxiliary camera in combination with the entity calibration pattern; a second determination sub-module, configured to: after the display device is turned on, determine a fourth two-dimensional image mapping relationship between the third image collected by the human eye simulation auxiliary camera and the virtual calibration pattern in combination with the virtual calibration pattern; and a third determination sub-module, configured to represent the third two-dimensional image mapping relationship and the fourth two-dimensional image mapping relationship as the calibration parameters.

In some embodiments, the alignment apparatus further includes: a replacement unit, configured to replace the entity calibration pattern with an equivalent entity calibration pattern that is higher than and parallel to the entity calibration pattern in the field of view of the human eye simulation auxiliary camera.

In some embodiments, the third determination module further includes: a fourth determination sub-module, configured to: after the display device is turned off, restore, by means of the equivalent entity calibration pattern, an equivalent virtual calibration pattern located on the ground, and project the equivalent virtual calibration pattern to a fourth image generated by the first camera, collect, by the human eye simulation auxiliary camera, a fifth image of the equivalent entity calibration pattern, and determine a fifth two-dimensional image mapping relationship between the fourth image and the fifth image; a fifth determination sub-module, configured to: after the display device is turned on, determine a sixth two-dimensional image mapping relationship between a sixth image collected by the human eye simulation auxiliary camera and the virtual calibration pattern in combination with the virtual calibration pattern; and a sixth determination sub-module, configured to represent the fifth two-dimensional image mapping relationship and the sixth two-dimensional image mapping relationship as the calibration parameters.

In some embodiments, the alignment apparatus for the display device is further configured to: after the display device is turned off, restore, by means of the equivalent entity calibration pattern, an equivalent virtual calibration pattern located on the ground, and project the equivalent virtual calibration pattern to a fourth image generated by the first camera, collect, by the human eye simulation auxiliary camera, a fifth image of the equivalent entity calibration pattern, and determine a fifth two-dimensional image mapping relationship between the fourth image and the fifth image; after the display device is turned on, determine a sixth two-dimensional image mapping relationship between a sixth image collected by the human eye simulation auxiliary camera and the virtual calibration pattern in combination with the virtual calibration pattern; and represent the fifth two-dimensional image mapping relationship and the sixth two-dimensional image mapping relationship as the calibration parameters.

In some embodiments, the alignment apparatus for the display device is further configured to: determine a height-above-ground value and a preset zoom ratio of the equivalent entity calibration pattern according to first spatial poses of the first camera, the human eye simulation auxiliary camera and the equivalent entity calibration pattern, which are obtained by calibration; according to the height-above-ground value and the preset zoom ratio, and in combination with the light propagation principle, restore the equivalent entity calibration pattern to the equivalent virtual calibration pattern located on the ground, and calculate a second spatial pose of the virtual calibration pattern; and project the virtual calibration pattern to an imaging plane of the first camera in combination with the second spatial pose, so as to generate the fourth image.

In some embodiments, the normalized parameter calibration correspondence is a mapping relationship between any normalized parameter and a calibration parameter that is in one-to-one correspondence with the normalized parameter, wherein the normalized parameter is a ratio of a location movement amount of the display device and/or the human eye simulation auxiliary camera to a variable stroke.

In some embodiments, the device of which the location is changed includes: the display device and/or the human eye simulation auxiliary camera.

In some embodiments, when the locations of the display device and/or the eyes of the user are changed, the alignment apparatus for the display device is further configured to: adjust the device of which the location is changed to at least two different calibration locations in a variable space, repeat the virtual-real turning-on and turning-off calibration method, and determine the normalized parameter calibration correspondence; and determine a normalized location parameter in the variable space on the basis of the actual location of the device, and determine the calibration parameters according to the normalized location parameter and the normalized parameter calibration correspondence.

In some embodiments, when the variable space is a variable linear stroke, the alignment apparatus for the display device is further configured to: adjust the device to at least two different calibration locations in the variable linear stroke, repeat the virtual-real turning-on and turning-off calibration method, and determine the normalized parameter calibration correspondence, wherein the at least two different calibration locations include: a highest display reference location and a lowest display reference location of the device in the variable linear stroke.

In some embodiments, when the variable space is a variable planar stroke, the alignment apparatus for the display device is further configured to: adjust the device to at least three different calibration locations in the variable planar stroke, repeat the virtual-real turning-on and turning-off calibration method, and determine the normalized parameter calibration correspondence, wherein the at least three different calibration locations include: three limit reference locations of the device, which are not colinear at the same time.

In some embodiments, when the variable space is a variable three-dimensional space stroke, the alignment apparatus for the display device is further configured to: adjust the device to at least four different calibration locations in the variable three-dimensional space stroke, repeat the virtual-real turning-on and turning-off calibration method, and determine the normalized parameter calibration correspondence, wherein the at least four different calibration locations include: four limit reference locations of the device, which are not coplanar at the same time.

In some embodiments, the alignment apparatus for the display device is further configured to: adjust the device of which the location is changed to at least two different calibration locations in the variable space, and repeat the virtual-real turning-on and turning-off calibration method at the different calibration locations to obtain a calibration parameter group, wherein the calibration parameter group includes calibration parameters and calibration locations, which are in-one-to-one correspondence; determine a normalized parameter group according to all the calibration locations and the variable space; and determine the normalized parameter calibration correspondence by means of fitting the calibration parameter group and the normalized parameter group.

In some embodiments, the alignment apparatus for the display device is further configured to: mount the human eye simulation auxiliary camera by means of a mechanical arm, adjust the location of the human eye simulation auxiliary camera, and provide corresponding three-dimensional normalized coordinates.

According to another aspect of the embodiment of the present application, further provided is a vehicle-mounted display system, including: a driver monitor system, configured to track a line-of-sight focusing area of a user in a target carrier, wherein the line-of-sight focusing area at least includes one entity reference object; a dashcam, configured to photograph the line-of-sight focusing area to obtain a photographed image; a vehicle-mounted controller, respectively connected with the driver monitor system and the dashcam for executing any one of the above-mentioned alignment method for the display device; and a head-up display, configured to project a virtual image to a preset location in front of the user, wherein a virtual identifier in the virtual image is aligned with the entity reference object in the line-of-sight focusing area.

According to another aspect of the embodiment of the present application, further provided is a wearable device, including: a line-of-sight tracking apparatus, configured to track a line-of-sight focusing area of a user in a target carrier, wherein the line-of-sight focusing area at least includes one entity reference object; a collection apparatus, configured to photograph the line-of-sight focusing area to obtain a photographed image; a terminal controller, respectively connected with the line-of-sight tracking apparatus and the collection apparatus for executing any one of the above-mentioned alignment method for the display device; and a head-up display, configured to project a virtual image to a preset location in front of the user, wherein a virtual identifier in the virtual image is aligned with the entity reference object in the line-of-sight focusing area.

The present disclosure solves the technical problem in related arts that the user cannot obtain good virtual-real alignment "immersive" augmented reality experience while moving the line of sight, thereby reducing the user interest of the user.

According to another aspect of the embodiment of the present application, further provided is a vehicle-mounted control device, including: a processor; and a memory, configured to store an executable instruction of the processor, wherein the processor is configured to execute the executable instruction, so as to execute any one of the above-mentioned alignment method for the display device.

According to another aspect of the embodiment of the present application, further provided is a computer-readable storage medium, including a stored computer program, wherein the computer program controls, when running, a device where the computer-readable storage medium is located to execute any one of the above-mentioned alignment method for the display device.

The serial numbers of the embodiments of the present application are only for description, and do not represent the advantages or disadvantages of the embodiments.

In the above embodiments of the present application, the description of each embodiment has its own emphasis. For parts that are not described in detail in a certain embodiment, reference may be made to related descriptions of other embodiments.

In the several embodiments provided in the present application, it should be understood that, the disclosed technical content may be implemented in other manners. The apparatus embodiments described above are merely exemplary, for example, the division of the units is only a logic function division, there may be other division manners in practical implementation, for example, a plurality of units or components may be combined or integrated to another system, or some features may be omitted or not executed. From another point of view, the displayed or discussed mutual coupling or direct coupling or communication connection may be indirect coupling or communication connection of units or modules through some interfaces, and may be in electrical, mechanical or other forms.

The units described as separate components may be separated physically or not, components displayed as units may be physical units or not, namely, may be located in one place, or may be distributed on a plurality of units. A part of or all of the units may be selected to implement the purposes of the solutions in the present embodiment according to actual demands.

In addition, the functional units in various embodiments of the present application may be integrated in one processing unit, or the units individually exist physically, or two or more units are integrated in one unit. The integrated unit may be implemented in the form of hardware, and may also be implemented in the form of a software functional unit.

If the integrated unit is implemented in the form of the software functional unit and is sold or used as an independent product, it may be stored in a computer-readable storage medium. Based on this understanding, the technical solutions of the present application substantially, or the part contributing to the prior art, or part of or all the technical solutions may be implemented in the form of a software product, the computer software product is stored in a storage medium, and includes several instructions for enabling a computer device (which may be a personnel computer, a server, or a network device or the like) to execute all or part of the steps of the method in various embodiments of the present application. The foregoing storage medium includes a variety of media capable of storing program codes, such as a USB disk, a read-only memory (ROM), a random access memory (RAM), a mobile hard disk, a magnetic disk, or an optical disk.

The foregoing descriptions are merely preferred embodiments of the present application. It should be pointed out that, those ordinary skilled in the art may make several improvements and modifications without departing from the principles of the present application, the scope of protection being defined by the appended claims.

## Claims

1. An alignment method for a display device, comprising:
determining (S202) a line-of-sight focusing area of a user in a target vehicle, wherein the line-of-sight focusing area at least comprises one entity reference object, and the line-of-sight focusing area comprises a real scenario;
acquiring (S204) a photographed image collected by a first camera for the real scenario, and extracting an entity identification point from the photographed image, wherein the entity identification point is a pixel point on the entity reference object;
determining (S206) a two-dimensional image mapping relationship between the photographed image and a virtual image in a current field of view of the user by means of pre-obtained calibration parameters, wherein the virtual image is an image to be projected by the display device; and
projecting (S208) the entity identification point into the virtual image according to the two-dimensional image mapping relationship, wherein a virtual marker in the virtual image is aligned with the entity reference object in the line-of-sight focusing area,
**characterised in that** the calibration parameters are determined through a virtual-real alignment calibration method and in combination with a human eye simulation auxiliary camera according to location states of the display device and eyes of the user.

2. The alignment method according to claim 1, wherein the determining the line-of-sight focusing area of the user in the target vehicle comprises:
determining a focusing gaze line of the user in front of the target vehicle on the basis of coordinates of a line-of-sight placement subject of the user;
performing intersection processing on the focusing gaze line and a plane where a ground in front of the target vehicle is located, so as to obtain a gaze location point of the user; and
determining the line-of-sight focusing area of the user in the target vehicle on the basis of the gaze location point.

3. The alignment method according to claim 1, wherein the alignment method further comprises:
in response to locations of the display device and the eyes of the user being maintained at fixed locations, determining, at the fixed locations, the calibration parameters through a virtual-real turning-on and turning-off calibration method and in combination with the human eye simulation auxiliary camera, wherein actual locations of the display device and the eyes of the user are acquired by a driver monitor system; or,
in response to at least one of the locations of the display device and the eyes of the user being changed, adjusting the device of which the location is changed to a plurality of different calibration locations, repeating the virtual-real turning-on and turning-off calibration method, determining a normalized parameter calibration correspondence, and determining the calibration parameters according to an actual location of the device and the normalized parameter calibration correspondence.

4. The alignment method according to claim 1, wherein the calibration parameters comprise: a first two-dimensional image mapping relationship between a first image collected by a first camera and a second image collected by the human eye simulation auxiliary camera, and a second two-dimensional image mapping relationship between a third image collected by the human eye simulation auxiliary camera and a virtual calibration pattern.

5. The alignment method according to claim 1, wherein the step: determining the calibration parameters through the virtual-real alignment calibration method and in combination with the human eye simulation auxiliary camera, comprises: by means of controlling a turn-on and turn-off of the display device, and in combination with an entity calibration pattern and a virtual calibration pattern,
determining the calibration parameters according to images captured by the human eye simulation auxiliary camera and the first camera.

6. The alignment method according to claim 5, wherein the step: by means of controlling the turn-on and turn-off of the display device, and in combination with the entity calibration pattern and the virtual calibration pattern, determining the calibration parameters according to the images captured by the human eye simulation auxiliary camera and the first camera, comprises:
after the display device is turned off, determining a third two-dimensional image mapping relationship between the first image collected by the first camera and the second image collected by the human eye simulation auxiliary camera in combination with the entity calibration pattern;
after the display device is turned on, determining a fourth two-dimensional image mapping relationship between the third image collected by the human eye simulation auxiliary camera and the virtual calibration pattern in combination with the virtual calibration pattern; and
representing the third two-dimensional image mapping relationship and the fourth two-dimensional image mapping relationship as the calibration parameters.

7. The alignment method according to claim 5, wherein the entity calibration pattern is placed in front of the target vehicle, and the virtual calibration pattern is displayed on a virtual image plane projected by the display device, wherein the entity calibration pattern comprises at least one entity feature point, and the virtual calibration pattern comprises at least one virtual feature point.

8. The alignment method according to claim 5, wherein the alignment method further comprises:
replacing the entity calibration pattern with an equivalent entity calibration pattern that is higher than and parallel to the entity calibration pattern in the field of view of the human eye simulation auxiliary camera, wherein the step: by means of controlling the turn-on and turn-off of the display device, and in combination with the equivalent entity calibration pattern and the virtual calibration pattern, determining the calibration parameters according to the images captured by the human eye simulation auxiliary camera and the first camera, comprises:
after the display device is turned off, restoring, by means of the equivalent entity calibration pattern, an equivalent virtual calibration pattern located on the ground, and projecting the equivalent virtual calibration pattern to a fourth image generated by the first camera, collecting, by the human eye simulation auxiliary camera, a fifth image in regard to the equivalent entity calibration pattern, and
determining a fifth two-dimensional image mapping relationship between the fourth image and the fifth image;
after the display device is turned on, determining a sixth two-dimensional image mapping relationship between a sixth image collected by the human eye simulation auxiliary camera and the virtual calibration pattern in combination with the virtual calibration pattern; and
representing the fifth two-dimensional image mapping relationship and the sixth two-dimensional image mapping relationship as the calibration parameters.

9. The alignment method according to claim 8, wherein the step: restoring, by means of the equivalent entity calibration pattern, the equivalent virtual calibration pattern located on the ground, and projecting the equivalent virtual calibration pattern to the fourth image generated by the first camera, comprises:
determining a height-above-ground value and a preset zoom ratio of the equivalent entity calibration pattern according to first spatial poses of the first camera, the human eye simulation auxiliary camera and the equivalent entity calibration pattern, which are obtained by calibration;
according to the height-above-ground value and the preset zoom ratio, and in combination with the light propagation principle, restoring the equivalent entity calibration pattern to the equivalent virtual calibration pattern located on the ground, and calculating a second spatial pose of the virtual calibration pattern; and
projecting the virtual calibration pattern to an imaging plane of the first camera in combination with the second spatial pose, so as to generate the fourth image.

10. **The** alignment method according to claim 3, wherein the device of which the location is changed comprises: at least one of the display device and the human eye simulation auxiliary camera, and the normalized parameter calibration correspondence is a mapping relationship between any normalized parameter and a calibration parameter that is in one-to-one correspondence with the normalized parameter, and the normalized parameter is a ratio of a location movement amount of at least one of the display device and the human eye simulation auxiliary camera to a variable stroke; and the human eye simulation auxiliary camera is mounted and a location of the human eye simulation auxiliary camera is adjusted by means of a mechanical arm, and corresponding three-dimensional normalized coordinates are provided.

11. The alignment method according to claim 3, wherein the step: in response to at least one of the locations of the display device and the eyes of the user being changed, adjusting the device of which the location is changed to the plurality of different calibration locations, repeating the virtual-real turning-on and turning-off calibration method, determining the normalized parameter calibration correspondence, and determining the calibration parameters according to the actual location of the device and the normalized parameter calibration correspondence, comprises:
adjusting the device of which the location is changed to at least two different calibration locations in a variable space, repeating the virtual-real turning-on and turning-off calibration method, and
determining the normalized parameter calibration correspondence; and
determining a normalized location parameter in the variable space on the basis of the actual location of the device, and determining the calibration parameters according to the normalized location parameter and the normalized parameter calibration correspondence.

12. The alignment method according to claim 11, the alignment method comprises:
wherein when the variable space is a variable linear stroke, adjusting the device to at least two different calibration locations in the variable linear stroke, repeating the virtual-real turning-on and turning-off calibration method, and determining the normalized parameter calibration correspondence, wherein the at least two different calibration locations comprise: a highest display reference location and a lowest display reference location of the device in the variable linear stroke; or
wherein when the variable space is a variable planar stroke, adjusting the device to at least three different calibration locations in the variable planar stroke, repeating the virtual-real turning-on and turning-off calibration method, and determining the normalized parameter calibration correspondence, wherein the at least three different calibration locations comprise: three limit reference locations of the device, which are not colinear at the same time; or
wherein when the variable space is a variable three-dimensional space stroke, adjusting the device to at least four different calibration locations in the variable three-dimensional space stroke, repeating the virtual-real turning-on and turning-off calibration method, and determining the normalized parameter calibration correspondence, wherein the at least four different calibration locations comprise: four limit reference locations of the device, which are not coplanar at the same time.

13. **The** alignment method according to claim 11, wherein the step: adjusting the device of which the location is changed to at least two different calibration locations in the variable space, repeating the virtual-real turning-on and turning-off calibration method, and determining the normalized parameter calibration correspondence, comprises:
adjusting the device of which the location is changed to at least two different calibration locations in the variable space, and repeating the virtual-real turning-on and turning-off calibration method at the different calibration locations to obtain a calibration parameter group, wherein the calibration parameter group comprises calibration parameters and calibration locations, which are in-one-to-one correspondence;
determining a normalized parameter group according to all the calibration locations and the variable space; and
determining the normalized parameter calibration correspondence by means of fitting the calibration parameter group and the normalized parameter group.

14. **The** alignment method according to claim 1, wherein the alignment method further comprises:
projecting the entity identification point into the virtual image in combination with the two-dimensional image mapping relationship and a posture of the target vehicle.

15. A vehicle-mounted display system, comprising:
a driver monitor system, configured to track a line-of-sight focusing area of a user in a target vehicle, wherein the line-of-sight focusing area at least comprises one entity reference object;
a dashcam, configured to photograph the line-of-sight focusing area to obtain a photographed image;
a vehicle-mounted controller, respectively connected with the driver monitor system and the dashcam for executing the alignment method for the display device according to any one of claims 1-14; and
a head-up display, configured to project a virtual image to a preset location in front of the user, wherein a virtual identifier in the virtual image is aligned with the entity reference object in the line-of-sight focusing area.

## Patentansprüche

1. Ausrichtungsverfahren für eine Anzeigevorrichtung, umfassend:
Bestimmen (S202) einer Sichtlinienfokussierfläche eines Benutzers in einem Zielfahrzeug, wobei die Sichtlinienfokussierfläche mindestens ein Entitätsreferenzobjekt umfasst und die Sichtlinienfokussierfläche ein reelles Szenario umfasst;
Akquirieren (S204) eines fotografierten Bilds, das durch eine erste Kamera für das reelle Szenario erfasst wird, und Extrahieren eines Entitätsidentifikationspunkts aus dem fotografierten Bild, wobei der Entitätsidentifikationspunkt ein Pixelpunkt auf dem Entitätsreferenzobjekt ist;
Bestimmen (S206) einer zweidimensionalen Bildabbildungsbeziehung zwischen dem fotografierten Bild und einem virtuellen Bild in einem aktuellen Sichtfeld des Benutzers mittels vorab erlangter Kalibrierungsparameter, wobei das virtuelle Bild ein Bild ist, das durch die Anzeigevorrichtung zu projizieren ist; und
Projizieren (S208) des Entitätsidentifikationspunkts in das virtuelle Bild gemäß der zweidimensionalen Bildabbildungsbeziehung, wobei eine virtuelle Markierung in dem virtuellen Bild mit dem Entitätsreferenzobjekt in der Sichtlinienfokussierfläche ausgerichtet ist,
**dadurch gekennzeichnet, dass**
die Kalibrierungsparameter durch ein virtuell-reelles Ausrichtungskalibrierungsverfahren und in Kombination mit einer Hilfskamera zur Simulation des menschlichen Auges gemäß Lagezuständen der Anzeigevorrichtung und der Augen des Benutzers bestimmt werden.

2. Ausrichtungsverfahren gemäß Anspruch 1, wobei das Bestimmen der Sichtlinienfokussierfläche des Benutzers in dem Zielfahrzeug Folgendes umfasst:
Bestimmen einer Fokussierblicklinie des Benutzers vor dem Zielfahrzeug auf der Grundlage von Koordinaten eines Sichtlinienplatzierungssubjekts des Benutzers;
Durchführen von Schnittpunktverarbeitung an der Fokussierblicklinie und einer Ebene, wo ein Boden vor dem Zielfahrzeug liegt, um einen Blicklagepunkt des Benutzers zu erlangen; und
Bestimmen der Sichtlinienfokussierfläche des Benutzers in dem Zielfahrzeug auf der Grundlage des Blicklagepunkts.

3. Ausrichtungsverfahren gemäß Anspruch 1, wobei das Ausrichtungsverfahren ferner Folgendes umfasst:
als Reaktion darauf, dass Lagen der Anzeigevorrichtung und der Augen des Benutzers in festen Lagen gehalten werden, Bestimmen der Kalibrierungsparameter in den festen Lagen durch ein virtuell-reelles Einschalt- und Ausschalt-Kalibrierungsverfahren und in Kombination mit der Hilfskamera zur Simulation des menschlichen Auges, wobei tatsächliche Lagen der Anzeigevorrichtung und der Augen des Benutzers durch ein Fahrerüberwachungssystem akquiriert werden; oder
als Reaktion darauf, dass mindestens eine der Lagen der Anzeigevorrichtung und der Augen des Benutzers geändert wird, Justieren der Vorrichtung, deren Lage geändert wird, auf eine Vielzahl von unterschiedlichen Kalibrierungslagen, Wiederholen des virtuell-reellen Einschalt- und
Ausschalt-Kalibrierungsverfahrens, Bestimmen einer normalisierten Parameterkalibrierungskorrespondenz und Bestimmen der Kalibrierungsparameter gemäß einer tatsächlichen Lage der Vorrichtung und der normalisierten Parameterkalibrierungskorrespondenz.

4. Ausrichtungsverfahren gemäß Anspruch 1, wobei die Kalibrierungsparameter Folgendes umfassen: eine erste zweidimensionale Bildabbildungsbeziehung zwischen einem ersten Bild, das durch eine erste Kamera erfasst wird, und einem zweiten Bild, das durch die Hilfskamera zur Simulation des menschlichen Auges erfasst wird, und eine zweite zweidimensionale Bildabbildungsbeziehung zwischen einem dritten Bild, das durch die Hilfskamera zur Simulation des menschlichen Auges erfasst wird, und einem virtuellen Kalibrierungsmuster.

5. Ausrichtungsverfahren gemäß Anspruch 1, wobei der Schritt: Bestimmen der Kalibrierungsparameter durch das virtuell-reelle Ausrichtungskalibrierungsverfahren und in Kombination mit der Hilfskamera zur Simulation des menschlichen Auges Folgendes umfasst: mittels Steuerns einer Einschaltung und Ausschaltung der Anzeigevorrichtung und in Kombination mit einem Entitätskalibrierungsmuster und einem virtuellen Kalibrierungsmuster, Bestimmen der Kalibrierungsparameter gemäß Bildern, die durch die Hilfskamera zur Simulation des menschlichen Auges und die erste Kamera aufgenommen werden.

6. Ausrichtungsverfahren gemäß Anspruch 5, wobei der Schritt: mittels Steuerns der Einschaltung und Ausschaltung der Anzeigevorrichtung und in Kombination mit dem Entitätskalibrierungsmuster und dem virtuellen Kalibrierungsmuster, Bestimmen der Kalibrierungsparameter gemäß den Bildern, die durch die Hilfskamera zur Simulation des menschlichen Auges und die erste Kamera aufgenommen werden, Folgendes umfasst:
nachdem die Anzeigevorrichtung ausgeschaltet ist, Bestimmen einer dritten zweidimensionalen Bildabbildungsbeziehung zwischen dem ersten Bild, das durch die erste Kamera erfasst wird, und
dem zweiten Bild, das durch die Hilfskamera zur Simulation des menschlichen Auges erfasst wird, in Kombination mit dem Entitätskalibrierungsmuster;
nachdem die Anzeigevorrichtung eingeschaltet ist, Bestimmen einer vierten zweidimensionalen Bildabbildungsbeziehung zwischen dem dritten Bild, das durch die Hilfskamera zur Simulation des menschlichen Auges erfasst wird, und dem virtuellen Kalibrierungsmuster in Kombination mit dem virtuellen Kalibrierungsmuster; und
Darstellen der dritten zweidimensionalen Bildabbildungsbeziehung und der vierten zweidimensionalen Bildabbildungsbeziehung als die Kalibrierungsparameter.

7. Ausrichtungsverfahren gemäß Anspruch 5, wobei das Entitätskalibrierungsmuster vor dem Zielfahrzeug platziert wird und das virtuelle Kalibrierungsmuster auf einer virtuellen Bildebene angezeigt wird, die durch die Anzeigevorrichtung projiziert wird, wobei das Entitätskalibrierungsmuster mindestens einen Entitätsmerkmalspunkt umfasst und das virtuelle Kalibrierungsmuster mindestens einen virtuellen Merkmalspunkt umfasst.

8. Ausrichtungsverfahren gemäß Anspruch 5, wobei das Ausrichtungsverfahren ferner Folgendes umfasst: Ersetzen des Entitätskalibrierungsmusters durch ein äquivalentes Entitätskalibrierungsmuster, das höher als das und parallel zu dem Entitätskalibrierungsmuster in dem Sichtfeld der Hilfskamera zur Simulation des menschlichen Auges ist, wobei der Schritt: mittels Steuerns der Einschaltung und Ausschaltung der Anzeigevorrichtung und in Kombination mit dem äquivalenten Entitätskalibrierungsmuster und dem virtuellen Kalibrierungsmuster, Bestimmen der Kalibrierungsparameter gemäß den Bildern, die durch die Hilfskamera zur Simulation des menschlichen Auges und die erste Kamera aufgenommen werden, Folgendes umfasst:
nachdem die Anzeigevorrichtung ausgeschaltet ist, Wiederherstellen eines äquivalenten virtuellen Kalibrierungsmusters, das auf dem Boden liegt, mittels des äquivalenten Entitätskalibrierungsmusters und Projizieren des äquivalenten virtuellen Kalibrierungsmusters auf ein viertes Bild, das durch die erste Kamera generiert wird, Erfassen eines fünften Bilds in Bezug auf das äquivalente Entitätskalibrierungsmuster durch die Hilfskamera zur Simulation des menschlichen Auges und Bestimmen einer fünften zweidimensionalen Bildabbildungsbeziehung zwischen dem vierten Bild und dem fünften Bild;
nachdem die Anzeigevorrichtung eingeschaltet ist, Bestimmen einer sechsten zweidimensionalen Bildabbildungsbeziehung zwischen einem sechsten Bild, das durch die Hilfskamera zur Simulation des menschlichen Auges erfasst wird, und dem virtuellen Kalibrierungsmuster in Kombination mit dem virtuellen Kalibrierungsmuster; und
Darstellen der fünften zweidimensionalen Bildabbildungsbeziehung und der sechsten zweidimensionalen Bildabbildungsbeziehung als die Kalibrierungsparameter.

9. Ausrichtungsverfahren gemäß Anspruch 8, wobei der Schritt: Wiederherstellen des äquivalenten virtuellen Kalibrierungsmusters, das auf dem Boden liegt, mittels des äquivalenten Entitätskalibrierungsmusters und Projizieren des äquivalenten virtuellen Kalibrierungsmusters auf das vierte Bild, das durch die erste Kamera generiert wird, Folgendes umfasst:
Bestimmen eines Höhe-über-Boden-Werts und eines voreingestellten Zoom-Verhältnisses des äquivalenten Entitätskalibrierungsmusters gemäß ersten räumlichen Posen der ersten Kamera, der Hilfskamera zur Simulation des menschlichen Auges und des äquivalenten Entitätskalibrierungsmusters, die durch Kalibrierung erlangt werden;
gemäß dem Höhe-über-Boden-Wert und dem voreingestellten Zoom-Verhältnis und in Kombination mit dem Lichtausbreitungsprinzip, Wiederherstellen des äquivalenten Entitätskalibrierungsmusters auf das äquivalente virtuelle Kalibrierungsmuster, das auf dem Boden liegt, und Berechnen einer zweiten räumlichen Pose des virtuellen Kalibrierungsmusters; und
Projizieren des virtuellen Kalibrierungsmusters auf eine Abbildungsebene der ersten Kamera in Kombination mit der zweiten räumlichen Pose, um das vierte Bild zu generieren.

10. Ausrichtungsverfahren gemäß Anspruch 3, wobei die Vorrichtung, deren Lage geändert wird, Folgendes umfasst: mindestens eine der Anzeigevorrichtung und der Hilfskamera zur Simulation des menschlichen Auges, und die normalisierte Parameterkalibrierungskorrespondenz eine Abbildungsbeziehung zwischen einem beliebigen normalisierten Parameter und einem Kalibrierungsparameter ist, der in einer Eins-zu-Eins-Korrespondenz mit dem normalisierten Parameter steht, und der normalisierte Parameter ein Verhältnis eines Lagebewegungsbetrags mindestens einer der Anzeigevorrichtung und der Hilfskamera zur Simulation des menschlichen Auges zu einem variablen Hub ist; und die Hilfskamera zur Simulation des menschlichen Auges montiert ist und eine Lage der Hilfskamera zur Simulation des menschlichen Auges mittels eines mechanischen Arms justiert wird und korrespondierende dreidimensionale normalisierte Koordinaten bereitgestellt werden.

11. Ausrichtungsverfahren gemäß Anspruch 3, wobei der Schritt: als Reaktion darauf, dass mindestens eine der Lagen der Anzeigevorrichtung und der Augen des Benutzers geändert wird, Justieren der Vorrichtung, deren Lage geändert wird, auf die Vielzahl von unterschiedlichen Kalibrierungslagen, Wiederholen des virtuell-reellen Einschalt- und Ausschalt-Kalibrierungsverfahrens, Bestimmen der normalisierten Parameterkalibrierungskorrespondenz und Bestimmen der Kalibrierungsparameter gemäß der tatsächlichen Lage der Vorrichtung und der normalisierten Parameterkalibrierungskorrespondenz Folgendes umfasst:
Justieren der Vorrichtung, deren Lage geändert wird, auf mindestens zwei unterschiedliche Kalibrierungslagen in einem variablen Raum, Wiederholen des virtuell-reellen Einschalt- und
Ausschalt-Kalibrierungsverfahrens und Bestimmen der normalisierten Parameterkalibrierungskorrespondenz; und
Bestimmen eines normalisierten Lageparameters in dem variablen Raum auf der Grundlage der tatsächlichen Lage der Vorrichtung und Bestimmen der Kalibrierungsparameter gemäß dem normalisierten Lageparameter und der normalisierten Parameterkalibrierungskorrespondenz.

12. Ausrichtungsverfahren gemäß Anspruch 11, das Ausrichtungsverfahren Folgendes umfasst:
wobei, wenn der variable Raum ein variabler linearer Hub ist, Justieren der Vorrichtung auf mindestens zwei unterschiedliche Kalibrierungslagen in dem variablen linearen Hub, Wiederholen des virtuell-reellen Einschalt- und Ausschalt-Kalibrierungsverfahrens und Bestimmen der normalisierten Parameterkalibrierungskorrespondenz, wobei die mindestens zwei unterschiedlichen Kalibrierungslagen Folgendes umfassen: eine höchste Anzeigereferenzlage und eine niedrigste Anzeigereferenzlage der Vorrichtung in dem variablen linearen Hub; oder
wobei, wenn der variable Raum ein variabler planarer Hub ist, Justieren der Vorrichtung auf mindestens drei unterschiedliche Kalibrierungslagen in dem variablen planaren Hub, Wiederholen des virtuell-reellen Einschalt- und Ausschalt-Kalibrierungsverfahrens und Bestimmen der normalisierten Parameterkalibrierungskorrespondenz, wobei die mindestens drei unterschiedlichen Kalibrierungslagen Folgendes umfassen: drei Grenzreferenzlagen der Vorrichtung, die nicht gleichzeitig kollinear sind; oder
wobei, wenn der variable Raum ein variabler dreidimensionaler Raumhub ist, Justieren der Vorrichtung auf mindestens vier unterschiedliche Kalibrierungslagen in dem variablen dreidimensionalen Raumhub, Wiederholen des virtuell-reellen Einschalt- und Ausschalt-Kalibrierungsverfahrens und Bestimmen der normalisierten Parameterkalibrierungskorrespondenz, wobei die mindestens vier unterschiedlichen Kalibrierungslagen Folgendes umfassen: vier Grenzreferenzlagen der Vorrichtung, die nicht gleichzeitig komplanar sind.

13. Ausrichtungsverfahren gemäß Anspruch 11, wobei der Schritt: Justieren der Vorrichtung, deren Lage geändert wird, auf mindestens zwei unterschiedliche Kalibrierungslagen in dem variablen Raum, Wiederholen des virtuell-reellen Einschalt- und Ausschalt-Kalibrierungsverfahrens und Bestimmen der normalisierten Parameterkalibrierungskorrespondenz Folgendes umfasst:
Justieren der Vorrichtung, deren Lage geändert wird, auf mindestens zwei unterschiedliche Kalibrierungslagen in dem variablen Raum und Wiederholen des virtuell-reellen Einschalt- und Ausschalt-Kalibrierungsverfahrens in den unterschiedlichen Kalibrierungslagen, um eine Kalibrierungsparametergruppe zu erlangen, wobei die Kalibrierungsparametergruppe Kalibrierungsparameter und Kalibrierungslagen umfasst, die in Eins-zu-Eins-Korrespondenz stehen;
Bestimmen einer normalisierten Parametergruppe gemäß allen Kalibrierungslagen und dem variablen Raum; und
Bestimmen der normalisierten Parameterkalibrierungskorrespondenz mittels Anpassens der Kalibrierungsparametergruppe und der normalisierten Parametergruppe.

14. Ausrichtungsverfahren gemäß Anspruch 1, wobei das Ausrichtungsverfahren ferner Folgendes umfasst:
Projizieren des Entitätsidentifikationspunkts in das virtuelle Bild in Kombination mit der zweidimensionalen Bildabbildungsbeziehung und einer Haltung des Zielfahrzeugs.

15. Fahrzeugmontiertes Anzeigesystem, umfassend:
ein Fahrerüberwachungssystem, das dazu konfiguriert ist, eine Sichtlinienfokussierfläche eines Benutzers in einem Zielfahrzeug zu verfolgen, wobei die Sichtlinienfokussierfläche mindestens ein Entitätsreferenzobjekt umfasst;
eine Dashcam, die dazu konfiguriert ist, die Sichtlinienfokussierfläche zu fotografieren, um ein fotografiertes Bild zu erlangen;
eine fahrzeugmontierte Steuerung, die jeweils mit dem Fahrerüberwachungssystem und der Dashcam zum Ausführen des Ausrichtungsverfahrens für die Anzeigevorrichtung gemäß einem der Ansprüche 1-14 verbunden ist; und
eine Blickfeldanzeige, die dazu konfiguriert ist, ein virtuelles Bild auf eine voreingestellte Lage vor dem Benutzer zu projizieren, wobei eine virtuelle Kennung in dem virtuellen Bild mit dem Entitätsreferenzobjekt in der Sichtlinienfokussierfläche ausgerichtet ist.

## Revendications

1. Procédé d'alignement pour un dispositif d'affichage, comprenant :
la détermination (S202) d'une zone de focalisation de ligne de visée d'un utilisateur dans un véhicule cible, dans lequel la zone de focalisation de ligne de visée comprend au moins un objet de référence d'entité, et la zone de focalisation de ligne de visée comprend un scénario réel ;
l'acquisition (S204) d'une image photographiée collectée par une première caméra pour le scénario réel, et l'extraction d'un point d'identification d'entité à partir de l'image photographiée, dans lequel le point d'identification d'entité est un point de pixel sur l'objet de référence d'entité ;
la détermination (S206) d'une relation de mappage d'image bidimensionnelle entre l'image photographiée et une image virtuelle dans un champ de vision actuel de l'utilisateur au moyen de paramètres d'étalonnage pré-obtenus, dans lequel l'image virtuelle est une image devant être projetée par le dispositif d'affichage ; et
la projection (S208) du point d'identification d'entité dans l'image virtuelle selon la relation de mappage d'image bidimensionnelle, dans lequel un marqueur virtuel dans l'image virtuelle est aligné avec l'objet de référence d'entité dans la zone de focalisation de ligne de visée,
**caractérisé en ce que** les paramètres d'étalonnage sont déterminés par un procédé d'étalonnage d'alignement virtuel-réel et en combinaison avec une caméra auxiliaire de simulation d'œil humain selon les états de position du dispositif d'affichage et des yeux de l'utilisateur.

2. Procédé d'alignement selon la revendication 1, dans lequel la détermination de la zone de focalisation de ligne de visée de l'utilisateur dans le véhicule cible comprend :
la détermination d'une ligne de regard de focalisation de l'utilisateur face au véhicule cible sur la base des coordonnées d'un sujet de placement de ligne de visée de l'utilisateur ;
la réalisation d'un traitement d'intersection sur la ligne de regard de focalisation et un plan où se trouve un sol face au véhicule cible, de façon à obtenir un point de position du regard de l'utilisateur ; et
la détermination de la zone de focalisation de ligne de visée de l'utilisateur dans le véhicule cible sur la base du point de position de regard.

3. Procédé d'alignement selon la revendication 1, dans lequel le procédé d'alignement comprend en outre :
en réponse au fait que les positions du dispositif d'affichage et des yeux de l'utilisateur soient maintenues à des positions fixes, la détermination, aux positions fixes, des paramètres d'étalonnage par un procédé d'étalonnage de mise en marche et d'arrêt virtuel-réel et en combinaison avec la caméra auxiliaire de simulation d'œil humain, dans lequel les positions réelles du dispositif d'affichage et des yeux de l'utilisateur sont acquises par un système de surveillance du conducteur ; ou,
en réponse au fait qu'au moins l'une des positions du dispositif d'affichage et des yeux de l'utilisateur soit changée, l'ajustement du dispositif dont la position est changée en une pluralité de positions d'étalonnage différentes, la répétition du procédé d'étalonnage de mise en marche et
d'arrêt virtuel-réel, la détermination d'une correspondance d'étalonnage des paramètres normalisés et la détermination des paramètres d'étalonnage selon une position réelle du dispositif et la correspondance d'étalonnage des paramètres normalisés.

4. Procédé d'alignement selon la revendication 1, dans lequel les paramètres d'étalonnage comprennent : une première relation de mappage d'image bidimensionnelle entre une première image collectée par une première caméra et une deuxième image collectée par la caméra auxiliaire de simulation d'œil humain, et une deuxième relation de mappage d'image bidimensionnelle entre une troisième image collectée par la caméra auxiliaire de simulation d'œil humain et un motif d'étalonnage virtuel.

5. Procédé d'alignement selon la revendication 1, dans lequel l'étape de : détermination des paramètres d'étalonnage par le procédé d'étalonnage d'alignement virtuel-réel et en combinaison avec la caméra auxiliaire de simulation d'œil humain, comprend : au moyen d'une commande de mise en marche et d'arrêt du dispositif d'affichage, et en combinaison avec un motif d'étalonnage d'entité et un motif d'étalonnage virtuel,
la détermination des paramètres d'étalonnage selon les images capturées par la caméra auxiliaire de simulation d'œil humain et la première caméra.

6. Procédé d'alignement selon la revendication 5, dans lequel l'étape de : au moyen d'une commande de mise en marche et d'arrêt du dispositif d'affichage, et en combinaison avec le motif d'étalonnage d'entité et le motif d'étalonnage virtuel, la détermination des paramètres d'étalonnage selon les images capturées par la caméra auxiliaire de simulation d'œil humain et la première caméra, comprend :
après l'arrêt du dispositif d'affichage, la détermination d'une troisième relation de mappage d'image bidimensionnelle entre la première image collectée par la première caméra et la deuxième image collectée par la caméra auxiliaire de simulation d'œil humain en combinaison avec le motif d'étalonnage d'entité ;
après la mise en marche du dispositif d'affichage, la détermination d'une quatrième relation de mappage d'image bidimensionnelle entre la troisième image collectée par la caméra auxiliaire de simulation d'œil humain et le motif d'étalonnage virtuel en combinaison avec le motif d'étalonnage virtuel ; et
la représentation de la troisième relation de mappage d'image bidimensionnelle et de la quatrième relation de mappage d'image bidimensionnelle en tant que paramètres d'étalonnage.

7. Procédé d'alignement selon la revendication 5, dans lequel le motif d'étalonnage d'entité est placé face au véhicule cible, et le motif d'étalonnage virtuel est affiché sur un plan d'image virtuel projeté par le dispositif d'affichage, dans lequel le motif d'étalonnage d'entité comprend au moins un point de caractéristique d'entité, et le motif d'étalonnage virtuel comprend au moins un point de caractéristique virtuel.

8. Procédé d'alignement selon la revendication 5, dans lequel le procédé d'alignement comprend en outre : le remplacement du motif d'étalonnage d'entité par un motif d'étalonnage d'entité équivalent qui est plus haut que et parallèle au motif d'étalonnage d'entité dans le champ de vision de la caméra auxiliaire de simulation d'œil humain, dans lequel l'étape de : au moyen d'une commande de mise en marche et d'arrêt du dispositif d'affichage, et en combinaison avec le motif d'étalonnage d'entité équivalent et le motif d'étalonnage virtuel, la détermination des paramètres d'étalonnage selon les images capturées par la caméra auxiliaire de simulation d'œil humain et la première caméra, comprend :
après l'arrêt du dispositif d'affichage, la restauration, au moyen du motif d'étalonnage d'entité équivalent, d'un motif d'étalonnage virtuel équivalent situé sur le sol, et la projection du motif d'étalonnage virtuel équivalent sur une quatrième image générée par la première caméra, la collecte, par la caméra auxiliaire de simulation d'œil humain, d'une cinquième image vis-à-vis du motif d'étalonnage d'entité équivalent, et la détermination d'une cinquième relation de mappage d'image bidimensionnelle entre la quatrième image et la cinquième image ;
après la mise en marche du dispositif d'affichage, la détermination d'une sixième relation de mappage d'image bidimensionnelle entre une sixième image collectée par la caméra auxiliaire de simulation d'œil humain et le motif d'étalonnage virtuel en combinaison avec le motif d'étalonnage virtuel ; et
la représentation de la cinquième relation de mappage d'image bidimensionnelle et de la sixième relation de mappage d'image bidimensionnelle en tant que paramètres d'étalonnage.

9. Procédé d'alignement selon la revendication 8, dans lequel l'étape de : restauration, au moyen du motif d'étalonnage d'entité équivalent, du motif d'étalonnage virtuel équivalent situé sur le sol, et la projection du motif d'étalonnage virtuel équivalent sur la quatrième image générée par la première caméra, comprend :
la détermination d'une valeur de hauteur au-dessus du sol et d'un rapport de zoom prédéfini du motif d'étalonnage d'entité équivalent selon les premières poses spatiales de la première caméra, de la caméra auxiliaire de simulation d'œil humain et du motif d'étalonnage d'entité équivalent, qui sont obtenues par étalonnage ;
en fonction de la valeur de hauteur au-dessus du sol et du rapport de zoom prédéfini, et en combinaison avec le principe de propagation de la lumière, la restauration du motif d'étalonnage d'entité équivalent sur le motif d'étalonnage virtuel équivalent situé sur le sol, et le calcul d'une deuxième pose spatiale du motif d'étalonnage virtuel ; et
la projection du motif d'étalonnage virtuel sur un plan d'imagerie de la première caméra en combinaison avec la deuxième pose spatiale, de manière à générer la quatrième image.

10. Procédé d'alignement selon la revendication 3, dans lequel le dispositif dont la position est changée comprend : au moins l'un du dispositif d'affichage et de la caméra auxiliaire de simulation d'œil humain, et la correspondance d'étalonnage des paramètres normalisés est une relation de mappage entre tout paramètre normalisé et un paramètre d'étalonnage qui est en correspondance univoque avec le paramètre normalisé, et le paramètre normalisé est un rapport entre une quantité de déplacement de position d'au moins l'un du dispositif d'affichage et de la caméra auxiliaire de simulation d'œil humain et une course variable ; et la caméra auxiliaire de simulation d'œil humain est montée et une position de la caméra auxiliaire de simulation d'œil humain est ajustée au moyen d'un bras mécanique, et des coordonnées normalisées tridimensionnelles correspondantes sont fournies.

11. Procédé d'alignement selon la revendication 3, dans lequel l'étape de : en réponse au fait qu'au moins l'une des positions du dispositif d'affichage et des yeux de l'utilisateur soit changée, l'ajustement du dispositif dont la position est changée en la pluralité de positions d'étalonnage différentes, la répétition du procédé d'étalonnage de mise en marche et d'arrêt virtuel-réel, la détermination de la correspondance d'étalonnage des paramètres normalisés et la détermination des paramètres d'étalonnage selon la position réelle du dispositif et la correspondance d'étalonnage des paramètres normalisés, comprend : l'ajustement du dispositif dont la position est changée en au moins deux positions d'étalonnage différentes dans un espace variable, la répétition du procédé d'étalonnage de mise en marche et d'arrêt virtuel-réel et la détermination de la correspondance d'étalonnage des paramètres normalisés ; et
la détermination d'un paramètre de position normalisé dans l'espace variable sur la base de la position réelle du dispositif et la détermination des paramètres d'étalonnage selon le paramètre de position normalisé et la correspondance d'étalonnage des paramètres normalisés.

12. Procédé d'alignement selon la revendication 11, le procédé d'alignement comprend :
dans lequel, lorsque l'espace variable est une course linéaire variable, l'ajustement du dispositif à au moins deux positions d'étalonnage différentes dans la course linéaire variable, la répétition du procédé d'étalonnage de mise en marche et d'arrêt virtuel-réel et la détermination de la correspondance d'étalonnage des paramètres normalisés, dans lequel les au moins deux positions d'étalonnage différentes comprennent : une position de référence d'affichage la plus élevée et une position de référence d'affichage la plus basse du dispositif dans la course linéaire variable ; ou
dans lequel, lorsque l'espace variable est une course plane variable, l'ajustement du dispositif à au moins trois positions d'étalonnage différentes dans la course plane variable, la répétition du procédé d'étalonnage de mise en marche et d'arrêt virtuel-réel et la détermination de la correspondance d'étalonnage des paramètres normalisés, dans lequel les au moins trois positions d'étalonnage différentes comprennent : trois positions de référence limite du dispositif, qui ne sont pas colinéaires en même temps ; ou
dans lequel, lorsque l'espace variable est une course d'espace tridimensionnel variable, l'ajustement du dispositif à au moins quatre positions d'étalonnage différentes dans la course d'espace tridimensionnel variable, la répétition du procédé d'étalonnage de mise en marche et d'arrêt virtuel-réel et la détermination de la correspondance d'étalonnage des paramètres normalisés, dans lequel les au moins quatre positions d'étalonnage différentes comprennent : quatre positions de référence limite du dispositif, qui ne sont pas coplanaires en même temps.

13. Procédé d'alignement selon la revendication 11, dans lequel l'étape de : l'ajustement du dispositif dont la position est changée en au moins deux positions d'étalonnage différentes dans l'espace variable, la répétition du procédé d'étalonnage de mise en marche et d'arrêt virtuel-réel, et la détermination de la correspondance d'étalonnage des paramètres normalisés, comprend :
l'ajustement du dispositif dont la position est changée en au moins deux positions d'étalonnage différentes dans l'espace variable, et la répétition du procédé d'étalonnage de mise en marche et
d'arrêt virtuel-réel aux différents positions d'étalonnage pour obtenir un groupe de paramètres d'étalonnage, dans lequel le groupe de paramètres d'étalonnage comprend des paramètres d'étalonnage et des positions d'étalonnage, qui sont en correspondance univoque ;
la détermination d'un groupe de paramètres normalisés en fonction de toutes les positions d'étalonnage et de l'espace variable ; et
la détermination de la correspondance d'étalonnage des paramètres normalisés au moyen de l'ajustement du groupe de paramètres d'étalonnage et du groupe de paramètres normalisés.

14. Procédé d'alignement selon la revendication 1, dans lequel le procédé d'alignement comprend en outre : la projection du point d'identification d'entité dans l'image virtuelle en combinaison avec la relation de mappage d'image bidimensionnelle et une posture du véhicule cible.

15. Système d'affichage monté sur véhicule, comprenant :
un système de surveillance de conducteur, configuré pour suivre une zone de focalisation de ligne de visée d'un utilisateur dans un véhicule cible, dans lequel la zone de focalisation de ligne de visée comprend au moins un objet de référence d'entité ;
une caméra de tableau de bord, configurée pour photographier la zone de focalisation de ligne de visée pour obtenir une image photographiée ;
un contrôleur monté sur véhicule, respectivement connecté au système de surveillance du conducteur et à la caméra de tableau de bord pour exécuter le procédé d'alignement pour le dispositif d'affichage selon l'une quelconque des revendications 1 à 14 ; et
un affichage tête haute, configuré pour projeter une image virtuelle vers une position prédéfinie face à l'utilisateur, dans lequel un identifiant virtuel dans l'image virtuelle est aligné avec l'objet de référence d'entité dans la zone de focalisation de ligne de visée.
